(19) Europäisches Patentamt
European Patent Office
Office européen des brevets

(11) **EP 4 293 930 A1**

(12) **EUROPEAN PATENT APPLICATION**
published in accordance with Art. 153(4) EPC

(43) Date of publication:
**20.12.2023 Bulletin 2023/51**

(21) Application number: **22774191.5**

(22) Date of filing: **21.03.2022**

(51) International Patent Classification (IPC):
**H04B 7/06** (2006.01)

(52) Cooperative Patent Classification (CPC):
**H04B 7/0413; H04B 7/06**

(86) International application number:
**PCT/CN2022/082034**

(87) International publication number:
**WO 2022/199532 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.03.2021 CN 202110304497
09.11.2021 CN 202111322239**

(71) Applicant: **Huawei Technologies Co., Ltd.
Shenzhen, Guangdong 518129 (CN)**

(72) Inventors:
• **DU, Rui**
**Shenzhen, Guangdong 518129 (CN)**
• **LIU, Chenchen**
**Shenzhen, Guangdong 518129 (CN)**
• **HAN, Xiao**
**Shenzhen, Guangdong 518129 (CN)**
• **ZHANG, Meihong**
**Shenzhen, Guangdong 518129 (CN)**
• **SUN, Yingxiang**
**Shenzhen, Guangdong 518129 (CN)**
• **LI, Yunbo**
**Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **METHOD BASED ON CHANNEL STATE INFORMATION FEEDBACK, DEVICE, AND MEDIUM**

(57) Provided are a method for performing feedback based on channel state information (CSI), a device, and a medium. In an example method, a sensing response device obtains CSI data based on channel estimation, and generates power delay profile (PDP) data based on the CSI data. Then, the sensing response device feeds back a part of PDP data in the generated PDP data. Therefore, feedback overheads are reduced. In addition, sensing performance is ensured to some extent.

FIG. 14

**Description**

**TECHNICAL FIELD**

This disclosure relates to the wireless local area network field, and more specifically, to a method for performing feedback based on channel state information (CSI), an apparatus, and a medium.

**BACKGROUND**

In a use case of wireless local area network sensing (Wireless Local Area Network Sensing, WLAN Sensing), a target in an area of interested is sensed by using WLAN signals. Different from the 802.11az, the sensed target in WLAN sensing does not need to carry any device. A WLAN sensing-related technology may be widely applied to intrusion detection, action recognition, breathing/heartbeat detection, and other scenarios. WLAN sensing is implemented in a manner in which sensing is performed based on channel state information (Channel State Information, CSI). The CSI reflects a channel state between a transmitting device and a receiving device, and includes rich detailed information. Therefore, a target of interested in an environment may be sensed through CSI analysis. However, a conventional CSI feedback manner cannot well support WLAN sensing.

**SUMMARY**

This disclosure provides a solution for performing feedback based on channel state information (CSI).
According to a first aspect of this disclosure, a communication method is provided. In the method, a sensing response device obtains CSI data based on channel estimation, and generates power delay profile (Power Delay Profile, PDP) data based on the CSI data. Then, the sensing response device feeds back a part of PDP data in the generated PDP data.
In some implementations, the sensing response device receives an indication for PDP data feedback from a sensing initiation device before the CSI data is obtained based on channel estimation.
In some implementations, the sensing response device generates the PDP data based on the CSI data in response to the reception of the indication for PDP data feedback.
In some implementations, the sensing response device receives the indication for PDP data feedback from the sensing initiation device by using at least one of a trigger frame, a null data packet announcement NDPA frame, an announcement frame, or a PDP frame for indicating PDP data feedback.
In some implementations, a common information field or a dedicated information field in the trigger frame indicates to perform PDP data feedback.
In some implementations, a trigger type field included in the common information field in the trigger frame indicates to perform PDP data feedback.
In some implementations, a sounding dialog token field or a dedicated information field in the NDPA frame indicates to perform PDP data feedback.
In some implementations, an association identifier (Association Identifier, AID) field included in the dedicated information field in the NDPA frame indicates to perform PDP data feedback.
In some implementations, the PDP frame includes a multi-input multi-output MIMO control field. The MIMO control field includes an indication for at least one of a number of columns, a number of rows, or a number of quantized bits of a matrix element of a PDP matrix for feedback.
In some implementations, the sensing response device selects the part of PDP data to be fed back from the generated PDP data based on the indication for the at least one of the number of columns, the number of rows, or the number of quantized bits of the matrix element of the PDP matrix for feedback.
In some implementations, the sensing response device feeds back the part of PDP data in the generated PDP data by using a PDP report frame.
In some implementations, the sensing response device feeds back the part of PDP data based on a propagation distance of a sensing signal.
In some implementations, the sensing response device receives an indication for a range of interested of the sensing signal from the sensing initiation device. The sensing response device feeds back the part of PDP data based on the range of interested. In some implementations, the sensing response device receives an indication for an offset from the sensing initiation device, and feeds back the part of PDP data based on the range of interested and the offset.
In some implementations, the sensing response device receives at least one of the indication for the range of interested or the indication for the offset from the sensing initiation device by using at least one of a trigger frame, a null data packet announcement NDPA frame, an announcement frame, or a PDP frame for indicating PDP data feedback.
In some implementations, a trigger dependent information field included in a common information field in the trigger frame indicates at least one of the range of interested or the offset.

In some implementations, the sensing response device feeds back the part of PDP data in the generated PDP data to the sensing initiation device.

According to a second aspect of this disclosure, a communication method is provided. In the method, a sensing response device receives an indication for PDP data feedback from a sensing initiation device. The sensing response device feeds back, based on the indication, a part of PDP data in PDP data generated based on CSI data.

In some implementations, the sensing response device feeds back the part of PDP data in the generated PDP data to the sensing initiation device.

In some implementations, the sensing response device obtains the CSI data based on channel estimation, and generates the PDP data based on the CSI data.

In some implementations, the sensing response device receives the indication for PDP data feedback from the sensing initiation device by using at least one of a trigger frame, a null data packet announcement NDPA frame, an announcement frame, or a PDP frame for indicating PDP data feedback.

In some implementations, a common information field or a dedicated information field in the trigger frame indicates to perform PDP data feedback.

In some implementations, a trigger type field included in the common information field in the trigger frame indicates to perform PDP data feedback.

In some implementations, a sounding dialog token field or a dedicated information field in the NDPA frame indicates to perform PDP data feedback.

In some implementations, an AID field included in the dedicated information field in the NDPA frame indicates to perform PDP data feedback.

In some implementations, the PDP frame includes a multi-input multi-output MIMO control field. The MIMO control field includes an indication for at least one of a number of columns, a number of rows, or a number of quantized bits of a matrix element of a PDP matrix for feedback.

In some implementations, the sensing response device selects the part of PDP data to be fed back from the generated PDP data based on the indication for the at least one of the number of columns, the number of rows, or the number of quantized bits of the matrix element of the PDP matrix for feedback.

In some implementations, the sensing response device feeds back the part of PDP data in the generated PDP data by using a PDP report frame.

In some implementations, the sensing response device feeds back the part of PDP data based on a propagation distance of a sensing signal.

In some implementations, the sensing response device receives an indication for a range of interested of the sensing signal from the sensing initiation device. The sensing response device feeds back the part of PDP data based on the range of interested. In some implementations, the sensing response device receives an indication for an offset from the sensing initiation device, and feeds back the part of PDP data based on the range of interested and the offset.

In some implementations, the sensing response device receives at least one of the indication for the range of interested or the indication for the offset from the sensing initiation device by using at least one of a trigger frame, a null data packet announcement NDPA frame, an announcement frame, or a PDP frame for indicating PDP data feedback.

In some implementations, a trigger dependent information field included in a common information field in the trigger frame indicates at least one of the range of interested or the offset.

According to a third aspect of this disclosure, a communication method is provided. In the method, a sensing initiation device sends an indication for PDP data feedback to a sensing response device, to trigger the sensing response device to generate, based on CSI data, PDP data for feedback. The sensing initiation device receives a part of PDP data in the generated PDP data from the sensing response device.

In some implementations, the sensing initiation device sends the indication for PDP data feedback to the sensing response device by using at least one of a trigger frame, a null data packet announcement NDPA frame, an announcement frame, or a PDP frame for indicating PDP data feedback.

In some implementations, a common information field or a dedicated information field in the trigger frame indicates to perform PDP data feedback.

In some implementations, a trigger type field included in the common information field in the trigger frame indicates to perform PDP data feedback.

In some implementations, a sounding dialog token field or a dedicated information field in the NDPA frame indicates to perform PDP data feedback.

In some implementations, an AID field included in the dedicated information field in the NDPA frame indicates to perform PDP data feedback.

In some implementations, the PDP frame includes a multi-input multi-output MIMO control field. The MIMO control field includes an indication for at least one of a number of columns, a number of rows, or a number of quantized bits of a matrix element of a PDP matrix for feedback.

In some implementations, the sensing initiation device receives the part of PDP data from the sensing response device by using a PDP report frame.

In some implementations, the sensing initiation device sends at least one of an indication for a range of interested or an indication for an offset to the sensing response device.

In some implementations, the sensing initiation device sends the at least one of the indication for the range of interested or the indication for the offset to the sensing response device by using at least one of a trigger frame, a null data packet announcement NDPA frame, an announcement frame, or a PDP frame for indicating PDP data feedback.

In some implementations, a trigger dependent information field included in a common information field in the trigger frame indicates at least one of the range of interested or the offset.

According to a fourth aspect of this disclosure, a communication apparatus is provided. The apparatus includes a first channel estimation module, a second channel estimation module, and a feedback module. The first channel estimation module is configured to obtain CSI data based on channel estimation by using a sensing response device. The second channel estimation module is configured to generate power delay profile PDP data based on the CSI data by using the sensing response device. The feedback module is configured to feed back a part of PDP data in the generated PDP data by using the sensing response device.

In some implementations, the apparatus further includes a first receiving module, configured to receive an indication for PDP data feedback from a sensing initiation device by using the sensing response device before the CSI data is obtained based on channel estimation.

In some implementations, the second channel estimation module is configured to generate the PDP data based on the CSI data by using the sensing response device in response to the reception of the indication for PDP data feedback.

In some implementations, the first receiving module is configured to receive the indication for PDP data feedback from the sensing initiation device by using the sensing response device by using at least one of a trigger frame, a null data packet announcement NDPA frame, an announcement frame, or a PDP frame for indicating PDP data feedback.

In some implementations, a common information field or a dedicated information field in the trigger frame indicates to perform PDP data feedback.

In some implementations, a trigger type field included in the common information field in the trigger frame indicates to perform PDP data feedback.

In some implementations, a sounding dialog token field or a dedicated information field in the NDPA frame indicates to perform PDP data feedback.

In some implementations, an AID field included in the dedicated information field in the NDPA frame indicates to perform PDP data feedback.

In some implementations, the PDP frame includes a multi-input multi-output MIMO control field. The MIMO control field includes an indication for at least one of a number of columns, a number of rows, or a number of quantized bits of a matrix element of a PDP matrix for feedback.

In some implementations, the feedback module is configured to select the part of PDP data to be fed back from the generated PDP data by using the sensing response device based on the indication for the at least one of the number of columns, the number of rows, or the number of quantized bits of the matrix element of the PDP matrix for feedback.

In some implementations, the feedback module is configured to feed back the part of PDP data in the generated PDP data by using the sensing response device by using a PDP report frame.

In some implementations, the feedback module is configured to feed back the part of PDP data by using the sensing response device based on a propagation distance of a sensing signal.

In some implementations, the apparatus further includes a second receiving module, configured to receive an indication for a range of interested in the sensing signal from the sensing initiation device by using the sensing response device. The feedback module is configured to feed back the part of PDP data based at least on the range of interested by using the sensing response device.

In some embodiments, the second receiving module is configured to receive an indication for an offset from the sensing initiation device by using the sensing response device. The feedback module is configured to feed back the part of PDP data based on the range of interested and the offset by using the sensing response device.

In some implementations, the second receiving module is configured to receive the indication for at least one of the range of interested or the offset from the sensing initiation device by using the sensing response device by using at least one of a trigger frame, a null data packet announcement NDPA frame, an announcement frame, or a PDP frame for indicating PDP data feedback.

In some implementations, a trigger dependent information field included in a common information field in the trigger frame indicates at least one of the range of interested or the offset.

According to a fifth aspect of this disclosure, a communication apparatus is provided. The apparatus includes a first receiving module and a feedback module. The first receiving module is configured to receive an indication for PDP data feedback from a sensing initiation device by using a sensing response device. The feedback module is configured to feed back, based on the indication by using the sensing response device, a part of PDP data in PDP data generated based on CSI data.

In some implementations, the apparatus further includes a first channel estimation module and a second channel estimation module. The first channel estimation module is configured to obtain the CSI data based on channel estimation by using the sensing response device. The second channel estimation module is configured to generate the power delay profile PDP data based on the CSI data by using the sensing response device.

In some implementations, the first receiving module is configured to receive the indication for PDP data feedback from the sensing initiation device by using the sensing response device by using at least one of a trigger frame, a null data packet announcement NDPA frame, an announcement frame, or a PDP frame for indicating PDP data feedback.

In some implementations, a common information field or a dedicated information field in the trigger frame indicates to perform PDP data feedback.

In some implementations, a trigger type field included in the common information field in the trigger frame indicates to perform PDP data feedback.

In some implementations, a sounding dialog token field or a dedicated information field in the NDPA frame indicates to perform PDP data feedback.

In some implementations, an AID field included in the dedicated information field in the NDPA frame indicates to perform PDP data feedback.

In some implementations, the PDP frame includes a multi-input multi-output MIMO control field. The MIMO control field includes an indication for at least one of a number of columns, a number of rows, or a number of quantized bits of a matrix element of a PDP matrix for feedback.

In some implementations, the feedback module is configured to select the part of PDP data to be fed back from the generated PDP data by using the sensing response device based on the indication for the at least one of the number of columns, the number of rows, or the number of quantized bits of the matrix element of the PDP matrix for feedback.

In some implementations, the feedback module is configured to feed back the part of PDP data in the generated PDP data by using the sensing response device by using a PDP report frame.

In some implementations, the feedback module is configured to feed back the part of PDP data by using the sensing response device based on a propagation distance of a sensing signal.

In some implementations, the apparatus further includes a second receiving module, configured to receive an indication for a range of interested from the sensing initiation device by using the sensing response device. The feedback module is configured to feed back the part of PDP data based at least on the range of interested by using the sensing response device.

In some embodiments, the second receiving module is configured to receive an indication for an offset from the sensing initiation device by using the sensing response device. The feedback module is configured to feed back the part of PDP data based on the range of interested and the offset by using the sensing response device.

In some implementations, the second receiving module is configured to receive at least one of the indication for the range of interested or the indication for the offset from the sensing initiation device by using the sensing response device by using at least one of a trigger frame, a null data packet announcement NDPA frame, an announcement frame, or a PDP frame for indicating PDP data feedback.

In some implementations, a trigger dependent information field included in a common information field in the trigger frame indicates at least one of the range of interested or the offset.

According to a sixth aspect of this disclosure, a communication apparatus is provided. The apparatus includes a first sending module and a third receiving module. The first sending module is configured to send an indication for PDP data feedback to a sensing response device by using a sensing initiation device, to trigger the sensing response device to generate, based on CSI data, PDP data for feedback. The third receiving module is configured to receive a part of PDP data in the generated PDP data from the sensing response device by using the sensing initiation device.

In some implementations, the first sending module is configured to send the indication for PDP data feedback to the sensing response device by using the sensing initiation device by using at least one of a trigger frame, a null data packet announcement NDPA frame, an announcement frame, or a PDP frame for indicating PDP data feedback.

In some implementations, a common information field or a dedicated information field in the trigger frame indicates to perform PDP data feedback.

In some implementations, a trigger type field included in the common information field in the trigger frame indicates to perform PDP data feedback.

In some implementations, a sounding dialog token field or a dedicated information field in the NDPA frame indicates to perform PDP data feedback.

In some implementations, an AID field included in the dedicated information field in the NDPA frame indicates to perform PDP data feedback.

In some implementations, the PDP frame includes a multi-input multi-output MIMO control field. The MIMO control field includes an indication for at least one of a number of columns, a number of rows, or a number of quantized bits of a matrix element of a PDP matrix for feedback.

In some implementations, the third receiving module is configured to receive the part of PDP data from the sensing response device by using the sensing initiation device by using a PDP report frame.

In some implementations, the apparatus further includes a second sending module, configured to send at least one of an indication for a range of interested or an indication for an offset to the sensing response device by using the sensing initiation device.

In some implementations, the second sending module is configured to send the at least one of the indication for the range of interested or the indication for the offset to the sensing response device by using the sensing initiation device by using at least one of a trigger frame, a null data packet announcement NDPA frame, an announcement frame, or a PDP frame for PDP data feedback.

In some implementations, a trigger dependent information field included in a common information field in the trigger frame indicates at least one of the range of interested or the offset.

According to a seventh aspect of this disclosure, a communication device is provided. The device includes a processor. The processor is coupled to a memory storing instructions. When the instructions are executed by the processor, the method according to the first aspect, the second aspect, or the third aspect of this disclosure is performed.

According to an eighth aspect of this disclosure, a computer-readable storage medium is provided. The computer-readable storage medium stores a program. When at least a part of the program is executed by a processor in a device, the device is enabled to perform the method according to the first aspect, the second aspect, or the third aspect of this disclosure.

According to a ninth aspect of this disclosure, a computer program product is provided. The computer program product is tangibly stored on a computer-readable medium and includes computer-executable instructions. When being executed, the computer-executable instructions implement an operation of the method according to any one of the first aspect or the implementations of the first aspect of this disclosure, or implement an operation of the method according to any one of the second aspect or the implementations of the second aspect of this disclosure, or implement an operation of the method according to any one of the third aspect or the implementations of the third aspect of this disclosure.

According to a tenth aspect of this disclosure, a chip is provided. The chip includes a processing circuit, configured to perform an operation of the method according to any one of the first aspect or the implementations of the first aspect of this disclosure, or implement an operation of the method according to any one of the second aspect or the implementations of the second aspect of this disclosure, or implement an operation of the method according to any one of the third aspect or the implementations of the third aspect of this disclosure.

It should be understood that content described in the summary part is not intended to limit a key or important feature of this disclosure, and is not intended to limit the scope of this disclosure. The following descriptions facilitate understanding of other features of this disclosure.

**BRIEF DESCRIPTION OF DRAWINGS**

The foregoing and other features, advantages, and aspects of embodiments of this disclosure become more apparent in conjunction with the accompanying drawings and with reference to the following detailed description. In the accompanying drawings, same or similar reference numerals indicate same or similar elements.

FIG. 1a and FIG. 1b illustrate two example scenarios of CSI feedback in WLAN sensing;
FIG. 2 illustrates an example environment in which embodiments of this disclosure may be implemented;
FIG. 3 illustrates a process of performing feedback based on CSI according to some embodiments of this disclosure;
FIG. 4 illustrates an example scenario of WLAN sensing according to some embodiments of this disclosure;
FIG. 5 illustrates a PDP to distance/delay curve according to some embodiments of this disclosure;
FIG. 6 illustrates a PDP to distance/delay curve according to some other embodiments of this disclosure;
FIG. 7 is a flowchart of performing feedback based on CSI at a sensing response device according to some embodiments of this disclosure;
FIG. 8 illustrates an example sensing process according to some embodiments of this disclosure;
FIG. 9a illustrates an example frame format of a trigger frame according to some embodiments of this disclosure;
FIG. 9b illustrates an example frame format of a common information field of a trigger frame according to some embodiments of this disclosure;
FIG. 9c illustrates an example frame structure of a trigger dependent common information field in a common information field of a trigger frame according to some embodiments of this disclosure;
FIG. 10a illustrates an example frame format of a null data packet announcement (NDPA) frame according to some embodiments of this disclosure;
FIG. 10b illustrates an example frame format of a station information 1 field of an NDPA frame according to some embodiments of this disclosure;
FIG. 11 illustrates an example frame structure of an HE multi-input multi-output (MIMO) control field according to some embodiments of this disclosure;

FIG. 12 illustrates a frame structure of a legacy EHT MIMO control (EHT MIMO Control) field;

FIG. 13 illustrates an example frame structure of an EHT MIMO Control field according to some embodiments of this disclosure;

FIG. 14 is a flowchart of performing feedback based on CSI at a sensing response device according to some other embodiments of this disclosure;

FIG. 15 is a flowchart of performing feedback based on CSI at a sensing initiation device according to some embodiments of this disclosure;

FIG. 16 is a schematic block diagram of a structure of an apparatus for performing feedback based on CSI at a sensing response device according to some embodiments of this disclosure;

FIG. 17 is a schematic block diagram of a structure of an apparatus for performing feedback based on CSI at a sensing initiation device according to some embodiments of this disclosure; and

FIG. 18 is a block diagram of a device in which some embodiments of this disclosure may be implemented.

## DESCRIPTION OF EMBODIMENTS

The following describes embodiments of this disclosure in detail with reference to the accompanying drawings. Although some embodiments of this disclosure are shown in the accompanying drawings, it should be understood that this disclosure may be implemented in various forms, and should not be construed as being limited to the embodiments described herein. On the contrary, these embodiments are provided so that this disclosure will be thoroughly and completely understood. It should be understood that the accompanying drawings and embodiments of this disclosure are merely used as examples, but are not intended to limit the protection scope of this disclosure.

As used herein, the term "including" and its variants are open to include, to be specific, "including but not limited to". The term "based on" is "based at least in part on". The term "an embodiment" means "at least one embodiment"; and the term "another embodiment" means "at least one another embodiment". Other terms are defined in the following description.

It should be understood that although the terms "first" and "second" may be used herein to describe various components, these components should not be limited by these terms. These terms are only used to distinguish one component from another. As used in this specification, the term "and/or" includes any and all combinations of one or more listed terms.

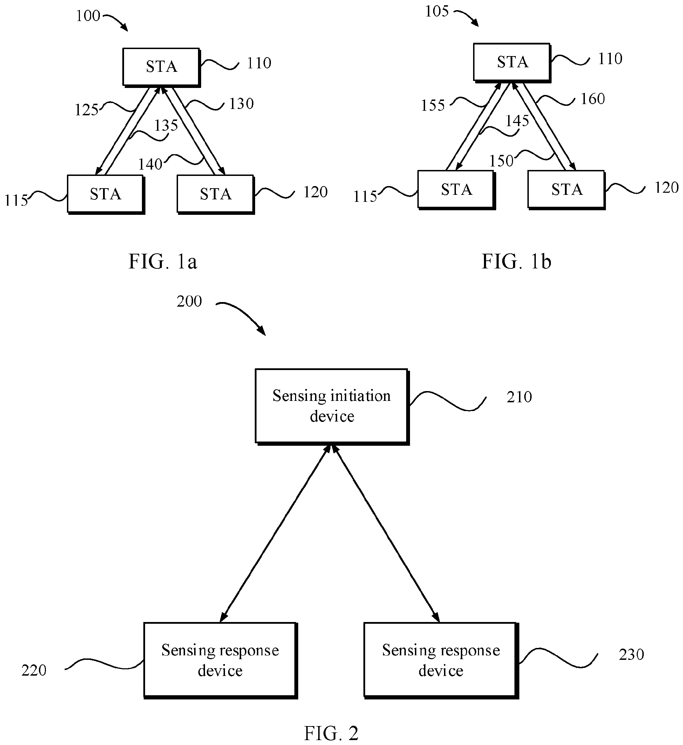

As described above, WLAN sensing is implemented in a manner in which sensing is performed based on CSI. FIG. 1a and FIG. 1b illustrate two example scenarios 100 and 105 of CSI feedback in WLAN sensing.

In the scenario 100 shown in FIG. 1a, a station (station, STA) 110 serves as a sensing initiator for initiating a sensing procedure and as a receiver for receiving a sensing signal in the sensing procedure, and a STA 115 and a STA 120 serve as sensing responders for responding to and participating in the sensing procedure initiated by the sensing initiator and as transmitters for transmitting the sensing signal in the sensing procedure. As shown in FIG. 1a, the STA 110 sends (125, 130) a trigger (trigger) frame to the STA 115 and the STA 120, and the STA 115 and the STA 120 send (135, 140) a sensing physical layer protocol data units (sensing Physical Layer Protocol Data Unit, sensing PPDU) to the STA 110. The STA 110 receives the sensing PPDU and performs environment/channel measurement to obtain CSI.

In the scenario 105 shown in FIG. 1b, the STA 110 serves as a sensing initiator and a transmitter, and the STA 115 and the STA 120 serve as sensing responders and receivers. As shown in FIG. 1b, the STA 110 sends (145, 150) a sensing PPDU to the STA 115 and the STA 120, and the STA 115 and the STA 120 receive the sensing PPDU, perform environment/channel measurement, and feed back (155, 160) CSI obtained through measurement to the STA 110. This is explicit CSI feedback.

Currently, in the 802.11 standard, there are two conventional explicit CSI feedback manners, including CSI matrix (CSI matrix) feedback and compressed CSI (compressed CSI) feedback. A CSI matrix is usually a complete CSI matrix, and includes all channel state information obtained through measurement. An operation based on the CSI matrix can well implement target sensing. However, due to overhead teaching, the CSI matrix is used only in the 802.11n, and is no longer used after the 802.11ac.

Compressed CSI is a CSI feedback manner introduced after the 802.11ac. In this manner, singular value decomposition (SVD) is performed on the CSI matrix, and then rotation angle solution (for example, Givens Rotation decomposition) is performed on an obtained right singular matrix V, and an obtained angle is fed back. For example, an angle value obtained through decomposition may be quantized based on a specified quantity of bits and then transmitted. The compressed CSI may be used to support multi-input multi-output (Multi-input Multi-output, MIMO) precoding, thereby improving data transmission efficiency. However, some information is lost in the foregoing angle calculation process. Therefore, WLAN sensing cannot be well supported.

An embodiment of this disclosure provides a new WLAN sensing compression feedback mechanism. According to this mechanism, when feeding back CSI in a sensing process initiated by a sensing initiation device and after obtaining CSI data based on channel estimation, a sensing response device generates power delay profile (Power Delay Profile, PDP) data based on the CSI data. The PDP data may reflect a relationship between energy and delay or distance in a propagation path of a sensing signal, and is also referred to as an energy delay image. The sensing response device feeds back a part of PDP data in the generated PDP data. The PDP data may be fed back to the sensing initiation device, or may be fed back to another participant in the sensing process. For example, if another device serves as a sensing transmitter, the sensing response device may feed back the PDP data to the corresponding sensing transmitter.

In this way, the sensing transmitter may sense a target in the propagation path of the sensing signal based on the received part of PDP data. In this manner, overheads (overhead) for CSI feedback can be significantly reduced, and sensing performance can be ensured to some extent.

In the following description, the PDP data may also be referred to as channel impulse response (Channel Impulse Response, CIR) data. In other words, in this disclosure, the terms "PDP data" and "CIR data" have the same physical meaning and may be used equivalently.

FIG. 2 illustrates an example environment 200 in which embodiments of this disclosure may be implemented.

As shown in FIG. 2, the environment 200 is a part of a wireless local area network, and includes one sensing initiation device 210 and two sensing response devices 220 and 230. In this example, the sensing initiation device 210 and the sensing response devices 220 and 230 are all STAs. It should be understood that this is merely an example rather than a limitation. Depending on a specific implementation and a scenario, the sensing initiation device 210 and the sensing response devices 220 and 230 may be any one of a STA or an access point (access point, AP). The sensing initiation device 210 and the sensing response devices 220 and 230 may be implemented by any appropriate device, including but not limited to an AP and a STA such as a communication server, a router, a switch, a bridge, a computer, or a mobile phone.

It should also be understood that the environment 200 illustrates one sensing initiation device and two sensing response devices merely for description purposes. Therefore, a scenario (FIG. 2) of a plurality of sensing response devices and one sensing initiation device is used as an example to describe embodiments of this disclosure. However, embodiments of this disclosure may be extended to be applied to a scenario of a plurality of sensing response devices and a plurality of sensing initiation devices.

In the environment 200, the sensing initiation device 210 can wirelessly communicate with the sensing response devices 220 and 230. The communication may comply with any appropriate communication technology and corresponding communication standards.

In some embodiments of this disclosure, in a WLAN sensing process, the sensing response device 220 or 230 receives a sensing signal transmitted by a transmitter and performs channel estimation to obtain CSI data. The sensing signal may be implemented by any appropriate signal. As an example, the sensing signal may be implemented by sensing a physical layer protocol data unit (Physical Layer Protocol Data Unit, PPDU). For example, the transmitter may transmit a null data packet (Null Data Packet, NDP) as the sensing signal. The transmitter may alternatively send a data packet including valid data as the sensing signal. The sensing signal may alternatively be another signal known to both the receiving and sending parties. When the CSI needs to be fed back, the sensing response device 220 converts the obtained CSI data into PDP data, and uses a part of PDP data for CSI feedback of WLAN sensing.

For ease of description, some embodiments of this disclosure are described by using an example in which the sensing initiation device 210 is used as a sensing transmitter. However, it should be understood that this is merely an example and not a limitation. Any appropriate device may serve as the sensing transmitter for transmitting the sensing signal. As an example, the sensing initiation device 210 may be used as the sensing transmitter. In some embodiments, the sensing response device 220 or 230 may alternatively perform both sending and receiving, and serve as both the sensing transmitter and the sensing receiver. Alternatively or additionally, one sensing device 220 may be used as the sensing transmitter, and the other sensing device 230 may be used as the sensing receiver.

The sensing response device 220 or 230 feeds back only a part of the PDP data generated based on the CSI data, thereby greatly reducing feedback overheads. In addition, because the PDP data can reflect a fading status of the propagation path of the sensing signal with different delays or distances, the PDP data can be effectively used for WLAN sensing to ensure sensing performance to some extent.

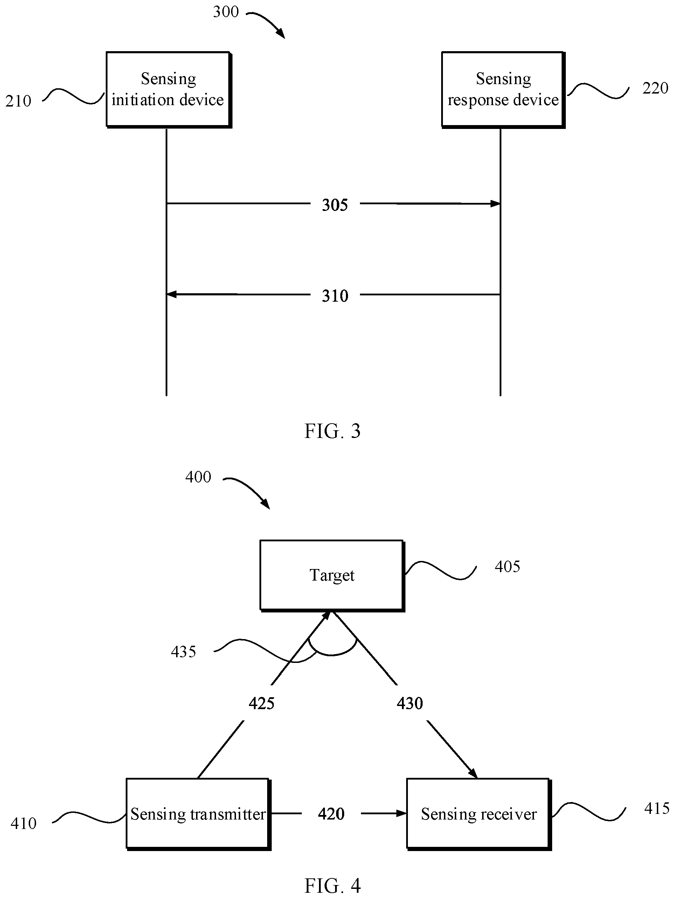

FIG. 3 illustrates a process of performing feedback based on CSI 300 according to some embodiments of this disclosure. For ease of description, the following describes the process 300 with reference to FIG. 2.

As shown in FIG. 3, in the process 300, the sensing initiation device 210 sends (305) an indication for PDP data feedback to the sensing response device 220 (or the sensing response device 230), to indicate the sensing response device 220 to feed back PDP data. The indication may be carried explicitly or implicitly by any appropriate message or field. The following describes embodiments of this aspect in detail.

After receiving the indication, the sensing response device 220 (or the sensing response device 230) feeds back (310) the PDP data to the sensing initiation device 210. In some embodiments, feedback of the PDP data of the sensing response device 220 may not be triggered by a feedback indication from the sensing initiation device 210. For example, the sensing response device 220 may feed back the PDP data to the sensing initiation device 210 periodically, or may feed back the PDP data to the sensing initiation device 210 spontaneously.

In a PDP data feedback process, the sensing response device 220 may first obtain CSI data based on channel estimation, then generate PDP data based on the CSI data, and feed back a part of PDP data to the sensing initiation device 210. A specific example is described below.

In this example, the sensing signal is implemented by using an OFDM signal. In this case, a relative relationship $a$ between frequency domain subcarrier CSI obtained through estimation based on the received sensing signal satisfies the following equation:

$$a(\tau_l) = \left[1, e^{-j2\pi\Delta f\tau_l}, \dots, e^{-j2\pi(K-1)\Delta f\tau_l}\right]^T \qquad \text{(Equation 1)}$$

In the foregoing equation, $\Delta f$ represents a subcarrier spacing, K represents a quantity of subcarriers, and $\tau_l$ represents a propagation delay corresponding to an $l^{th}$ path. Herein, for simplicity, energy on each subcarrier is denoted as 1.

Inverse Fourier transform (Inverse Fourier Transform, IFT) processing is performed on the CSI in the foregoing equation, and an amplitude is obtained, so that the corresponding PDP data may be obtained. In some embodiments, to accelerate computation, inverse fast Fourier transform (Inverse fast Fourier transform, IFFT) processing is used. A PDP reflects a relationship between a multipath power (or energy) and a delay/distance. For example, if a delay of a multipath is $\tau$, a peak appears at a corresponding propagation delay $\tau$ or distance $\tau \times c$ (c represents a propagation speed or a light speed of an electromagnetic wave), indicating that there is energy at the delay (that is, indicating the path). Correspondingly, a target existing in a propagation path may be sensed based on the PDP data.

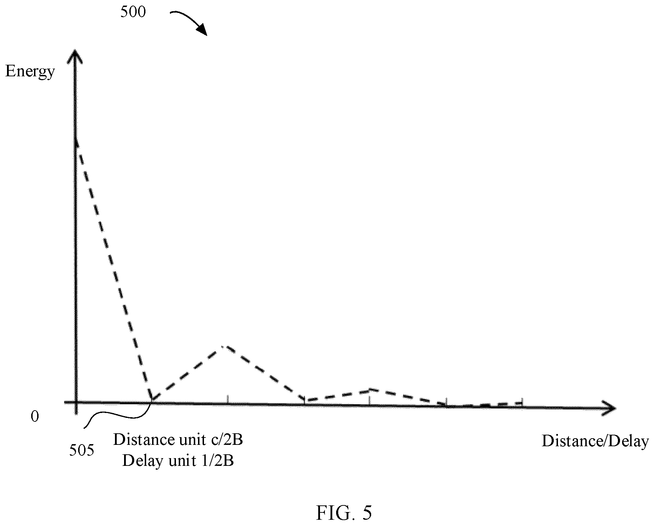

The following describes an example of a feedback process that may be used by the sensing response device 220 or 230 with reference to FIG. 4 and FIG. 5.

FIG. 4 illustrates an example scenario 400 of WLAN sensing according to some embodiments of this disclosure. In the scenario 400, there is a target 405 to be sensed. In this way, a sensing signal from a sensing transmitter 410 to a sensing receiver 415 passes through at least two paths during propagation. One is a direct path 420 between the sensing transmitter 410 and the sensing receiver 415. The other is a reflection path passing through the target 405, including a path 425 from the sensing transmitter 410 to the target 405 and a path 430 from the target 405 to the sensing receiver 415.

Under a simple condition, a distance resolution $\Delta R$ of the sensing signal is inversely proportional to a bandwidth, and satisfies the following equation:

$$\Delta R = \frac{c}{2Bcos(\frac{\beta}{2})} \qquad \text{(Equation 2)}$$

c represents a propagation speed/a light speed of an electromagnetic wave, B represents an equivalent bandwidth of the signal, and $\beta$ represents an included angle formed by the transmitter, the target, and the receiver, for example, an included angle 435 shown in FIG. 4, which may be referred to as a bistatic angle in a radar.

In the scenario 400, the sensing transmitter 410 and the sensing receiver 415 are two separate devices. That is, receiving and sending are separated. In some embodiments, one device may send and receive a sensing signal, and serve as both a transmitter and a receiver. That is, sending and receiving are performed at a same location. In this case, $\beta = 0$, and the distance resolution is:

$$\Delta R = \frac{c}{2B} \qquad \text{(Equation 3)}$$

It may be learned that in a case in which the device performs both sending and receiving, the distance resolution is the smallest. In a case in which receiving and sending are separated, the distance resolution is affected by the included angle $\beta$ formed by the transmitter, the target, and the receiver, and is always greater than the distance resolution in the case in which one device performs both sending and receiving.

For example, if a bandwidth of the sensing signal (for example, an NDP) is 20 MHz, the distance resolution $\Delta R$ of sensing during sending and receiving by one device is 7.5 m (greater than 7.5 m in a scenario in which receiving and sending are separated). In this case, the PDP data shown in FIG. 5 may be obtained by performing IFT processing (without adding zeros) on the foregoing equation 1 and obtaining an amplitude. In a curve 500 shown in FIG. 5, a horizontal axis represents distance/time, and a point 505 on the horizontal axis represents a multiple of a distance/delay unit. For example, a distance unit is c/2B, and a delay unit is 1/2B.

A distance range of a common application scenario of WLAN sensing is approximately 10 m. In other words, a range of interested corresponds to information in the first two distance units. In this way, in most WLAN sensing scenarios, only information (for example, may be represented as a complex number) in the first several distance units needs to be selected for feedback after IFFT processing. For example, a number N of distance units for feedback may be selected according to the following equation:

$$N = \frac{Range\ of\ interested}{\Delta R} \qquad \text{(Equation 4)}$$

It should be understood that the number N of the distance units for feedback is a positive integer greater than zero. Therefore, the foregoing equation 4 is equivalent to:

$$N = ceil(\frac{Range\ of\ interested}{\Delta R}) = \lceil \frac{Range\ of\ interested}{\Delta R} \rceil \qquad \text{(Equation 4-1)}$$

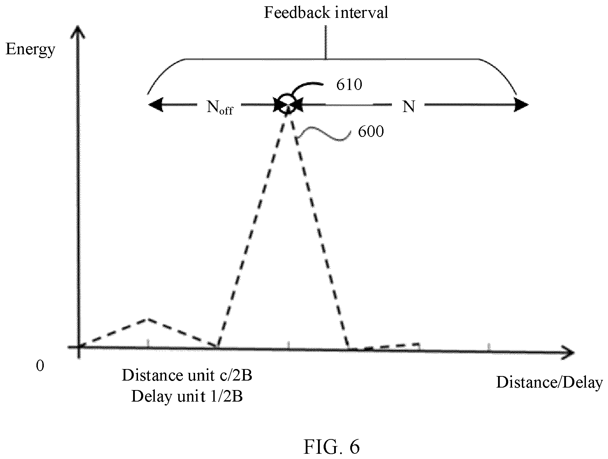

In some embodiments, as shown in FIG. 6, an offset such as a synchronization error may cause an offset of the PDP. Compared with FIG. 5, in a PDP to distance/delay curve 600 shown in FIG. 6, the PDP is offset rightward as a whole due to the offset. In this case, the offset may be considered when the information in the distance units is fed back. For example, information in several more distance units may be fed back.

The following describes in detail how to select and feed back PDP data in a case of a PDP offset.

In some embodiments, a number (namely, a number of complex number sampling points for feedback, denoted as $N_{feedback}$) of distance units for feedback is determined by both the range of interested and the offset. Specifically, the number $N_{feedback}$ of the complex number sampling points for feedback is determined by both a first number (denoted as $N$) associated with the range of interested and a second number (denoted as $N_{off}$) associated with the offset. Further, the number $N_{feedback}$ of the complex number sampling points for feedback is a sum of the first number $N$ and the second number $N_{feedback}$.

In some embodiments, a point with a maximum amplitude after IFT/IFFT is selected as a feedback reference point (as shown in FIG. 6, a sampling point 610 is selected as a reference point). The first number $N$ of sampling points (which may or may not include the reference point) associated with the range of interested are further selected backward. The second number $N_{off}$ of sampling points (which may or may not include the reference point) associated with the offset are selected forward.

Further, the reference point is usually used as a sampling point at which feedback is mandatory. In some embodiments, the reference point is considered as a part of the first number $N$ of sampling points. Optionally, in some other embodiments, the reference point is considered as a part of the second number $N_{off}$ of sampling points.

In an example embodiment, the reference point is considered as a part of the first number $N$ of sampling points. In this case, the first number $N$ associated with the range of interested and the second number $N_{off}$ associated with the offset are calculated as:

$$N = \lceil \frac{Range\ of\ interested}{\Delta R} \rceil + 1 \qquad \text{(Equation 5-1)}$$

$$N_{off} = \lceil \frac{Offset}{\Delta R} \rceil \qquad \text{(Equation 5-2)}$$

In another example embodiment, the reference point is considered as a part of the second number $N_{off}$ of sampling points. In this case, the first number $N$ associated with the range of interested and the second number $N_{off}$ associated with the offset are calculated as:

$$N = \lceil \frac{Range\ of\ interested}{\Delta R} \rceil \qquad \text{(Equation 6-1)}$$

$$N_{off} = \lceil \frac{Offset}{\Delta R} \rceil + 1 \qquad \text{(Equation 6-2)}$$

In some embodiments, a continuous feedback length (namely, the number $N_{feedback}$ of complex number sampling points corresponding to consecutive index values) is sent to a sensing initiator. In addition, in some embodiments, the feedback information may further include an index of the reference point, so that the sensing initiator may learn of an absolute location of a feedback sampling point in a coordinate system.

It should be understood that the range of interested for determining the first number N and the offset for determining the second number $N_{off}$ may be obtained by the sensing initiator and/or a sensing responder in any manner. This is not limited in this disclosure. In an example embodiment, one or more of a sensing trigger frame, a sensing NDPA frame, and a sensing request/response frame may be used to exchange the range of interested and the offset.

In some embodiments, the first number $N$ associated with the range of interested and the second number $N_{off}$ associated with the offset may be determined based on a preconfigured correspondence. For example, based on an actual requirement, one or more of the following relationships may be maintained at the sensing initiator and the sensing responder: a first correspondence associated with the first number $N$, and a second correspondence associated with the second number $N_{off}$.

Further, based on whether the first correspondence or the second correspondence is maintained, a corresponding element that needs to be maintained is determined. For example, when the first correspondence is maintained, the maintained element includes the first number $N$ and the range of interested. Similarly, when the second correspondence is maintained, the maintained element includes the second number $N_{off}$ and the offset.

In some embodiments, unique identifier (ID) information may be allocated to each different $N/N_{off}$ value, for example, first ID information (corresponding to the first number $N$) and second ID information (corresponding to the first number $N_{off}$). In this case, the first ID information and the second ID information may also be used as an element in a maintained correspondence. For example, the first correspondence indicates a correspondence between the first number $N$ and the first ID information, and the second correspondence indicates a correspondence between the second number $N_{off}$ and the second ID information.

In some embodiments, the first ID information and the second ID information are a bit sequence. Further, in some embodiments, a bit size (bit size) of the bit sequence of the first ID information is determined by at least one of a supported maximum range of interested and a supported maximum number of feedback sampling points (denoted as $N_{max}$). Similarly, in some embodiments, a bit size of the bit sequence of the second ID information is determined by at least one of a supported maximum offset and a supported maximum number (denoted as $N_{max-off}$) of feedback sampling points.

In a specific embodiment, the bit size of the bit sequence of the first ID information is in direct proportion to the supported maximum range of interested/the supported maximum number of feedback sampling points.

In some embodiments, if the supported maximum number $N_{max}$ of feedback sampling points is a continuous integer, the bit size of the bit sequence of the first ID information may be calculated based on the supported maximum number $N_{max}$ of feedback sampling points, for example,

$$\text{Bit size of the bit sequence of the first ID information } = \log_2 N_{max} \text{ (Equation 7-1)}$$

Optionally, in some other embodiments, if the supported maximum number Nmax of feedback sampling points is a continuous integer, the bit size of the bit sequence of the first ID information may be calculated based on the supported maximum range of interested. Examples are as follows:

When the reference point is considered as a part of the first number N of sampling points,

$$\text{Bit size of the bit sequence of the first ID information } =$$

$$\log_2\left(\left\lceil \frac{\text{Supported maximum range of interested}}{\Delta R} \right\rceil + 1\right) \qquad \text{(Equation 7-2)}$$

When the reference point is not considered as a part of the first number N of sampling points,

$$\text{Bit size of the bit sequence of the first ID information } =$$

$$\log_2\left(\left\lceil \frac{\text{Supported maximum range of interested}}{\Delta R} \right\rceil\right) \qquad \text{(Equation 7-3)}$$

Similarly, in some embodiments, the bit size of the bit sequence of the second ID information is in direct proportion to the supported maximum offset/the supported maximum number (denoted as $N_{max-off}$) of feedback sampling points.

In some embodiments, if the supported maximum number $N_{max\text{-}off}$ of feedback sampling points is a continuous integer, the bit size of the bit sequence of the second ID information may be calculated based on the supported maximum number $N_{max\text{-}off}$ of feedback sampling points, for example,

$$\text{Bit size of the bit sequence of the second ID information} = \log_2 N_{max-off}$$

$$\text{(Equation 8-1)}$$

Optionally, in some other embodiments, if the supported maximum number $N_{max\text{-}off}$ of feedback sampling points is a continuous integer, the bit size of the bit sequence of the second ID information may be calculated based on the supported maximum offset. Examples are as follows:

When the reference point is considered as a part of the second number $N_{off}$ of sampling points,

$$\text{Bit size of the bit sequence of the second ID information} =$$

$$\log_2\left(\left\lceil \frac{\text{Supported maximum offset}}{\Delta R} \right\rceil + 1\right) \qquad \text{(Equation 8-2)}$$

When the reference point is not considered as a part of the second number $N_{off}$ of sampling points,

$$\text{Bit size of the bit sequence of the second ID information} =$$

$$\log_2\left(\left\lceil \frac{\text{Supported maximum offset}}{\Delta R} \right\rceil\right) \qquad \text{(Equation 8-3)}$$

It should be understood that the foregoing manner of calculating the bit size of the bit sequence of the first/second ID information is merely an example. In another embodiment, for example, when the supported maximum number $N/N_{max\text{-}off}$ of feedback sampling points is a set of non-consecutive integer discrete values, the bit size of the bit sequence of the first/second ID information may be adjusted based on a number of discrete value sets.

Further, because the number of sampling points for feedback is in a direct proportion to a sensing PPDU bandwidth, in some embodiments, when the sensing PPDU bandwidth further increases, the number (for example, the first number $N$ and the second number $N_{off}$) of sampling points for feedback may be represented as a bandwidth-related function. In some embodiments, the number of sampling points for feedback corresponding to a reference bandwidth (for example, 20 MHz) is set to a reference value (denoted as $N_{ref}$), and the number (denoted as $N_{PPDF}$) of points for feedback corresponding to the sensing PPDU bandwidth is determined based on a relationship between the sensing PPDU bandwidth and the reference bandwidth. For example, $N_{PPDF} = N_{ref} \times N_B$, where $N_B$ = Sending PPDU bandwidth/Reference bandwidth.

It should be understood that the reference bandwidth, the sensing PPDU bandwidth, and/or $N_B$ may be learned of by the sensing initiator and the sensing responder.

Table A below describes an example of the first correspondence.

**Table A**

| First ID information (bit sequence) | Number of complex number samples | Range of interested (m) |
|---|---|---|
| 00 | $1 \times N_B + 1$ | (0-7.5] or [0-7.5] |
| 01 | $2 \times N_B + 1$ | (7.5-15] or [7.5-15] |
| 10 | $3 \times N_B + 1$ | (15-22.5] or [15-22.55) |
| 11 (or reserved) | $4 \times N_B + 1$ (or reserved) | (15-22.5] or [15-22.5), or reserved |
| Expandable | Expandable | Expandable |

Table B below describes an example of the second correspondence.

**Table B**

| Second ID information (bit sequence) | Number of complex number samples | Offset (m) |
|---|---|---|
| 0 | $1 \times N_B$ | (0-7.5] or (0-7.5) |
| 1 | $2 \times N_B$ | (7.5-15] or [7.5-15] |
| Expandable | Expandable | Expandable |

In some other embodiments, Table A has the following variants.

**Table A-1**

| First ID information (bit sequence) | Number of complex number samples | Range of interested (m) |
|---|---|---|
| 00 | 1 | (0-3.75] or (0-3.75) |
| 01 | $1 \times N_B + 1$ | (0-7.5] or [0-7.5) |
| 10 | $2 \times N_B + 1$ | (7.5-15] or [7.5-15) |
| 11 | $3 \times N_B + 1$ | (15-22.5] or [15-22.55) |
| Expandable | Expandable | Expandable |

In specific embodiments of Table A (or Table A-1) and Table B, the reference point is used as a part of the first number $N$, the reference bandwidth is 20 MHz, $N_B$ is a multiple of the sensing PPDU bandwidth relative to the 20 MHz reference bandwidth (that is, sensing PPDU bandwidth/20 MHz reference bandwidth), and the distance resolution $\Delta R$ is 7.5 m. It should be understood that the foregoing values are merely for description purposes. In other embodiments, a specific value may be determined based on an actual requirement. This is not limited in this disclosure.

Further, it should be further understood that when the supported maximum range of interested increases/decreases, Table A (or Table A-1) may include more/less entries, and the bit size of the first ID information may also accordingly increase/decrease. Similarly, when the supported maximum offset increases, Table B may include more entries, and the bit size of the second ID information may also accordingly increase. In some embodiments, the bit size of the first ID information depends on a number of entries included in Table A, and the bit size of the second ID information depends on a number of entries included in Table B.

It should be further understood that any one element of the "first ID information", the "number of complex number samples", and the "range of interested" in Table A (or Table A-1) is not necessarily included, and may be omitted based on an actual requirement. Similarly, any one element of the "second ID information", the "number of complex number samples", and the "offset" in Table B may also be omitted based on an actual requirement. For example, the sensing initiator and/or the sensing responder may maintain only the first column and the second column in Table A (or Table A-1) and Table B.

Based on the correspondence between Table A (or Table A-1) and Table B, the sensing initiator and/or the sensing responder may determine a number of corresponding feedback sampling points. For example, when the PPDU bandwidth is 20 MHz, the range of interested is 10 m, and the offset is 5 m, it may be determined that the first number N associated with the range of interested and the second number $N_{off}$ associated with the offset are 2 + 1 and 1, respectively.

Further, Table A (or Table A-1) and Table B may be combined to generate Table C, and the individual Table C indicates a correspondence. An example is as follows:

**Table C Example**

| Third ID information (bit sequence) | Number of complex number samples | Offset (m) + range of interested (m) |
|---|---|---|
| 00 | $1 \times N_B + 1$ | 0 + (0-7.5] or [0-7.5] |
| 01 | $2 \times N_B + 1$ | 0 + (7.5-15] or [7.5-15) |
| | | (0-7.5] or [0-7.5) + (0-7.5] or [0-7.5] |
| Expandable | Expandable | Expandable |

It should be understood that the foregoing Table C is merely for description purposes. When the correspondence is maintained by using an individual table, a form of the table may be adjusted based on an actual requirement (for example, corresponding elements in tables A, A-1, and B are added, reduced, or integrated). Further, it should be understood that the bit size of the third ID information depends on a number of entries included in Table C.

In some embodiments, the first ID information, the second ID information, and/or the third ID information may be exchanged by the sensing initiator and/or the sensing responder, so that the sensing responder determines the first number $N$, the second number $N_{off}$, and/or the number $N_{feedback}$ of complex number sampling points for feedback. It should be understood that the first ID information, the second ID information, and/or the third ID information may be obtained by the sensing initiator and/or the sensing responder in any manner. This is not limited in this disclosure. In an example embodiment, the sensing trigger frame, the sensing NDPA frame, and the sensing request/response frame may be used to exchange the first ID information and the second ID information. In addition, in some embodiments, the feedback information may further include the index of the reference point, so that the sensing initiator may learn of the absolute location of the feedback sampling point in the coordinate system.

Optionally, in some embodiments, a part of sample values in a feedback interval are fed back by using a plurality of non-consecutive segments (also referred to as a segment feedback manner), that is, a part of an entire feedback length (for example, $N + N_{off} + 1$) is fed back. In other words, the feedback sampling point corresponds to a plurality of segments in the feedback interval, the plurality of segments are not consecutive, and a maximum span distance of each segment does not exceed the entire feedback length (for example, $N + N_{off} + 1$).

In some embodiments, the feedback information includes values of sampling points in a plurality of segments and first information indicating a relative relationship between a plurality of consecutive segments. It should be understood that the first information may be determined based on an actual requirement, and may be a start index or an end index of a segment, or an interval between segments (that is, a quantity of feedback null defects between two adjacent segments), or may be omitted in some cases.

In a specific embodiment, the first information is a start index and/or an end index corresponding to each of the plurality of segments. In another specific embodiment, the first information is a start index of a first segment in the plurality of segments and a segment interval between the plurality of segments. In another specific embodiment, the first information is a combination of a start index and an end index of a segment, and an interval between segments. For example, relative locations of some segments are indicated by using the start index and the end index of the segment, and relative locations of other segments are indicated by using the interval between the segments.

Optionally, in some embodiments, a plurality of discrete points (also referred to as a discrete feedback manner) are used to feed back some sample values in the feedback interval. For example, the feedback information is some sampling points in the feedback interval. In some embodiments, the feedback information is a value corresponding to the selected discrete sampling point and second information indicating locations of a plurality of discrete sampling points.

In a specific embodiment, the second information is an index value of the selected discrete sampling point. In another specific embodiment, when a distance between two adjacent discrete points is greater than 1, the second information may also be represented as an interval between the two adjacent discrete points. In another specific embodiment, the second information is a combination of an index value of a discrete sampling point and an interval between two adjacent discrete points. For example, relative locations of some sampling points are indicated by using index values of the sampling points, and relative locations of other segments are indicated by using the interval between the two adjacent discrete points.

Optionally, in some implementations, the segment feedback manner and the discrete feedback manner may be combined for use.

It should be understood that the foregoing feedback manner provided in this disclosure is merely an example. In another embodiment, the information may be fed back to the sensing initiator in any manner, so that the sensing initiator learns of a value and a location relationship of the feedback sampling point. A specific expression form of the feedback information is not limited in this disclosure.

In some embodiments, the sensing transmitter may use cyclic shift diversity (Cyclic Shift Diversity, CSD) during transmission. In this case, the sensing receiver may perform CSD removal on the CSI obtained through measurement, and then perform subsequent PDP data calculation and feedback.

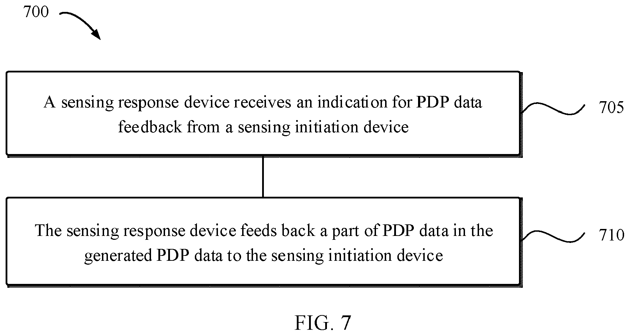

FIG. 7 is a flowchart of a method 700 for performing feedback based on CSI at a sensing response device 220 or 230 according to some embodiments of this disclosure.

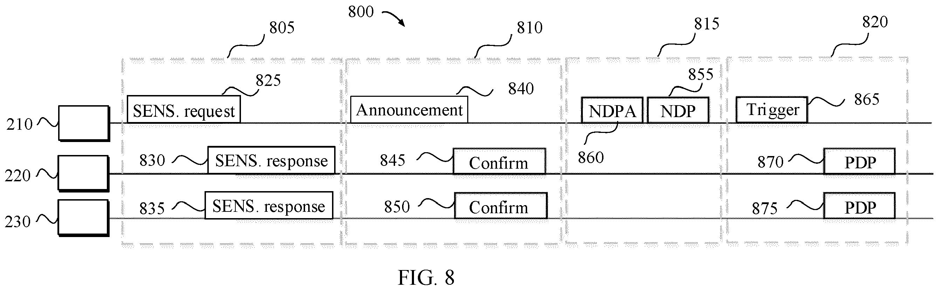

As shown in FIG. 7, in a block 705, the sensing response device 220 or 230 receives an indication for PDP data feedback from the sensing initiation device 210. The indication may be implemented in any appropriate manner. The following describes an example implementation of the indication for PDP data feedback according to some embodiments of this disclosure with reference to FIG. 8.

FIG. 8 illustrates an example sensing process 800 according to some embodiments of this disclosure.

As shown in FIG. 8, the sensing process 800 includes a finding stage 805, a setting stage 810, a measurement stage 815, and a feedback stage 820. In the finding stage 805, the sensing initiation device 210 sends a sensing request (SENS. request) frame 825, and the sensing response devices 220 and 230 reply with sensing response (SENS. response) frames 830 and 835, to exchange information such as a device capability.

In the setting stage 810, the sensing initiation device 210 sends an announcement (Announcement) frame 840, to assign sensing roles (for example, the transmitter and the receiver), specify a transmission periodicity of a sensing signal, and the like. In this example, the sensing initiation device 210 is used as a transmitter of the sensing signal, and the sensing response devices 220 and 230 are used as receivers of the sensing signal. The sensing response devices 220 and 230 reply with confirmation (Confirmation) frames 845 and 850.

In the measurement stage 815, the sensing initiation device 210 sends a sensing PPDU, and the sensing response devices 220 and 230 receive the sensing PPDU and accordingly perform channel or environment measurement. In this example, the sensing initiation device 210 sends an NDP 855 as the sensing signal to the sensing response devices 220 and 230. The sensing initiation device 210 also sends a null data packet announcement (Null Data Packet Announcement, NDPA) frame 860.

In the feedback stage 820, the sensing initiation device 210 sends a trigger (Trigger) frame 865, to trigger the sensing response devices 220 and 230 to perform CSI-based feedback. The sensing response devices 220 and 230 perform corresponding processing on the CSI obtained through measurement according to the compression manner described in embodiments of this disclosure, and feed back PDP data 870 and 875.

In this example, the sensing initiation device 210 may send an indication for PDP data feedback to the sensing response device 220 and/or 230 by using the trigger frame 865, the NDPA frame 860, and/or the Announcement frame 840. The indication may be transmitted by reusing an existing field in the foregoing frame or by using a new field. In some embodiments, a PDP frame for indicating PDP data feedback may also be specifically designed.

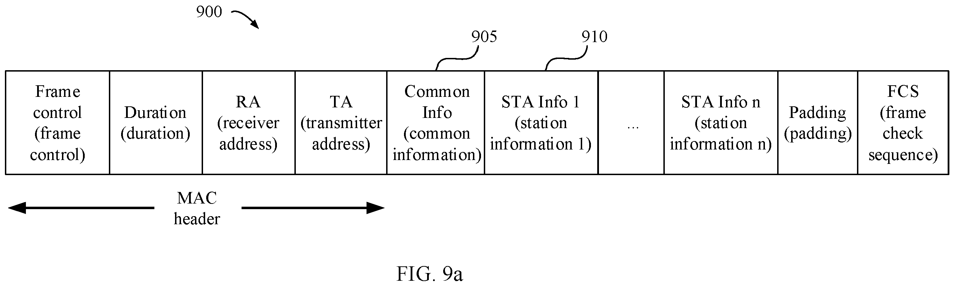

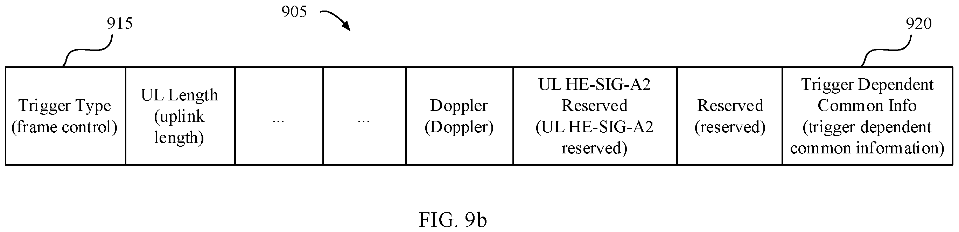

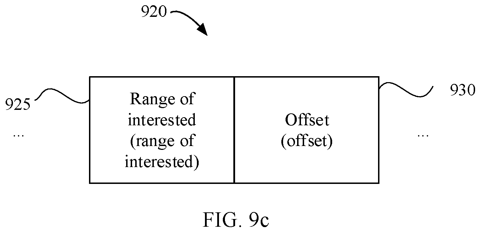

The following describes an example implementation in which the sensing initiation device 210 sends the indication associated with PDP data feedback to the sensing response device 220 or 230 by using the trigger frame 865 in the feedback stage 820 with reference to FIG. 9a, FIG. 9b, and FIG. 9c.

FIG. 9a illustrates an example frame format 900 of a trigger frame according to some embodiments of this disclosure.

As an example, the indication for PDP data feedback may be transmitted by using a common information (Common Info) field 905 or a dedicated information field such as a station information 1 (STA Info 1) field 910 of the trigger frame. The indication may be transmitted by reusing any field in the common information field 905 and the dedicated information field or by designing a new field.

FIG. 9b illustrates an example frame format of a common information field 905 of a trigger frame according to some embodiments of this disclosure. As an example, a trigger type (Trigger Type) field 915 included in the common information field 905 of the trigger frame may indicate to perform PDP data feedback. For example, a new trigger type that is named PDP report poll (PDP Report Poll) may be added to indicate sensing PDP data feedback. Table 1 below describes an example value of the trigger type field.

**Table 1**

| Trigger type (Trigger Type) | Trigger frame variable (Trigger Frame Variant) |
| --- | --- |
| 0 | Basic (Basic) |
| 1 | Beamforming report poll (Beamforming Report Poll) |
| ... | ... |
| 7 | NDP feedback report poll (NDP Feedback Report Poll) |
| 8 | PDP report poll (PDP Report Poll) |
| 9-15 | Reserved (Reserved) |

Correspondingly, when receiving the trigger frame whose trigger type field value is 8, the sensing response device 220 or 230 may determine that the sensing initiation device 210 requires the sensing response device to feed back PDP data.

In some embodiments, the sensing initiation device 210 may also indicate the range of interested and/or the offset of the sensing signal for the sensing response device 220 or 230. For example, a trigger dependent common information (Trigger Dependent Common Info) field 920 in the common information field 905 shown in FIG. 9b may indicate the range of interested and/or the offset.

FIG. 9c illustrates an example frame structure of a trigger dependent common information field 920 in a common information field 905 of a trigger frame according to some embodiments of this disclosure. In this example, the trigger dependent common information field 920 includes a range of interested (Range of Interested) field 925 and an offset (Offset) field 930.

Table 2 below describes an example value of the range of interested field 925. In this example, if a reference bandwidth of the sensing signal is 20 MHz, the distance resolution ∆R of sensing during sending and receiving by one device is 7.5 m. If the bandwidth of the sensing signal exceeds 20 MHz, the corresponding number N of PDP data for feedback is described in the last column in Table 2, where N may be represented as a function of a bandwidth B of the sensing signal.

**Table 2**

| Range of interested field | Description | Corresponding number N of PDP data for feedback |
|---|---|---|
| 000 | Range of interested: 15 m | $N = 2 \times (B/20\ \text{MHz})$ |
| 001 | Range of interested: 30 m | $N = 4 \times (B/20\ \text{MHz})$ |
| ... | ... | ... |

Table 3 below describes the number of PDP data for feedback taking into account the offset indicated in the offset field 930.

**Table 3**

| Range of interested field | Description | Corresponding number L of PDP data for feedback |
|---|---|---|
| 000 | Range of interested: 15 m | $L = N + \text{offset value}$ |
| 001 | Range of interested: 30 m | $L = N + \text{offset value}$ |
| ... | ... | ... |

In some embodiments, a value of the offset field 930 may be the same in multiple rounds of transmission-feedback of the sensing process. In some other embodiments, a larger value may be used at the initial stage of the sensing process, to ensure correct feedback of channel/environment information. The value of the offset may be gradually reduced according to a predetermined principle in multiple iterative rounds of transmission-feedback, to ensure that the channel/environment information can be correctly fed back, and to reduce the amount of feedback.

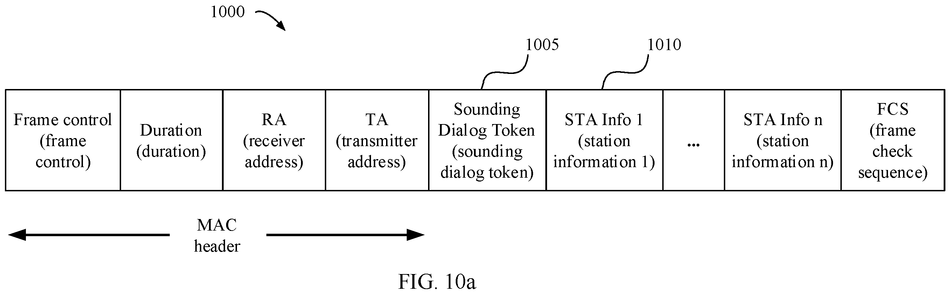

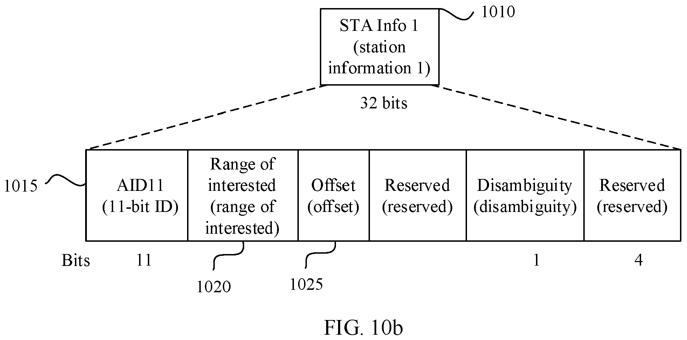

The sensing initiation device 210 and the sensing response devices 220 and 230 exchange related information by using the trigger frame in the feedback stage 815, and information exchange may also be implemented by using the NDPA frame in the measurement stage 815. The following describes an example implementation in which the indication associated with PDP data feedback is sent by using the NDPA frame 860 in the setting stage 810 with reference to FIG. 10a and FIG. 10b.

FIG. 10a illustrates an example frame format 1000 of an NDPA frame according to some embodiments of this disclosure.

As an example, the indication for PDP data feedback may be transmitted by using a sounding dialog token (Sounding Dialog Token) field 1005 or a dedicated information field such as a station information 1 (STA Info 1) field 1010 of the NDPA frame. The indication may be transmitted by reusing any field in the sounding dialog token field 1005 and the station information 1 field 1010 or by designing a new field.

FIG. 10b illustrates an example frame format of a station information 1 field 1010 of an NDPA frame according to some embodiments of this disclosure.

In this example, an 11-bit identifier (AID11) field 1015 in the station information 1 field 1010 is used to transmit the indication for PDP data feedback. The station information 1 field 1010 may further include a range of interested (Range of Interested) field 1020 and an offset (Offset) field 1025.

The indication associated with PDP data feedback may be transmitted by reusing an existing field of an HE NDPA frame in a Wi-Fi 6 standard specification. Table 4 describes an example definition of related fields of the HE NDPA frame.

**Table 4**

| Field name | Description |
|---|---|
| Sounding dialog token (Sounding Dialog Token) | Meaning of the first two bits<br>00 VHT NDPA<br>01 HE NDPA<br>10 Ranging NDPA (ranging NDPA)<br>11 Sensing NDPA (sensing NDPA)<br>This field indicates that the NDPA is a sensing NDPA, to indicate to perform PDP feedback.<br>As an example, when this field corresponds to the sensing NDPA (11), there may be one common Info field and a plurality of STA Info fields subsequently.<br>The range of interested (Range of Interested) field and the offset (Offset) field may be used to exchange relevant information in feedback. When information to be exchanged between STAs is the same, the range of interested field and the offset field are placed in the Common Info field. If the information is the same, |
|  | the corresponding fields may be placed in the corresponding STA Info fields. |
| Station information 1 (STAInfo 1) | In addition, when the sounding dialog token field corresponds to the HE NDPA (01), the 11-bit identifier (AID 11) field may indicate to perform PDP feedback.<br>For example, a special AID (for example, AID = 2045/2046) indicates that the HE NDPA is an HE sensing NDPA, to indicate to perform PDP feedback. In this case, the first two bits of the Sounding Dialog Token field may be 01, indicating that the NDPA is an HE NDPA.<br>The AID11 of the first user field (STA Info 1) is the special AID described above.<br>In this case, the HE NDPA is an HE sensing NDPA, and the first user information field (STA Info 1) is a common field. This method is a parallel solution of the solution that is described in the first row in Table 4 and in which the first two bits of the Dialog Token field are set to 11 to indicate the Sensing NDPA. |
| Station information 1 (STAInfo 1) | The Range of Interested field and the Offset field indicate the range of interested and the offset.<br>If the sensing response devices both use the same range of interested and the same offset, the Range of Interested field and the Offset field are common information fields.<br>If different ranges of interested and different offsets are allocated to the sensing response devices, corresponding information may be placed in an STA Info 2 field to an STA Info n field corresponding to each sensing response device. In this case, the STA Info 1 may still use the special AID (for example, 2045/2046) to distinguish the HE sensing NDPA. |

The indication associated with PDP data feedback may alternatively be transmitted by reusing an existing field of an EHT NDPA frame in a Wi-Fi 7 standard specification. Table 5 describes an example definition of fields in the EHT NDPA frame for sending the indication associated with PDP data feedback.

**Table 5**

| Field name | Description |
|---|---|
| Sounding dialog token (Sounding Dialog Token) | Meaning of the first two bits<br>00 VHT NDPA<br>01 HE NDPA<br>10 Ranging NDPA (ranging NDPA)<br>11 EHT NDPA |

(continued)

| Field name | Description |
|---|---|
| Station information 1 (STA Info 1) | The AID 11 field indicates to perform PDP feedback.<br>For example, a special AID (for example, AID = 2045/2046) indicates that the EHT NDPA is an EHT sensing NDPA, to indicate to perform PDP feedback.<br>In this case, the first two bits of the Sounding Dialog Token field may be 11, indicating that the NDPA is an EHT NDPA. When the EHT sensing NDPA is indicated, the AID 11 in the first user information field (STAInfo 1) may be set to a special ID (for example, AID = 2045/2046), to indicate that the NDPA is an EHT sensing NDPA, and the field is a common information field. |
| | The Range of Interested field and the Offset field indicate the range of interested and the offset.<br>If the sensing response devices both use the same range of interested and the same offset, the Range of Interested field and the Offset field are common information fields.<br>If different ranges of interested and different offsets are allocated to the sensing response devices, corresponding information may be placed in an STA Info 2 field to an STA Info n field corresponding to each sensing response device. In this case, the STA Info 1 may still use the special AID (for example, 2045/2046) to distinguish the EHT sensing NDPA. |

In addition, the Announcement frame 840 may alternatively be used in the setting stage 810 to provide the indication associated with PDP data feedback. The corresponding indication may be transmitted by reusing an existing field in the Announcement field or by designing a new field. As an example, the Range of Interested field and the Offset field may be set in the Announcement field, to indicate the range of interested and the offset.

In some embodiments, a dedicated PDP frame may alternatively be designed to provide the indication associated with PDP data feedback. An example HE PDP frame is described below. A new type may be added to an HE action (HE Action) field, as described in Table 6.

**Table 6**

| Value | Description |
|---|---|
| 0 | HE compressed beamforming/CQI (HE compressed beamforming/CQI) |
| 1 | Quiet time period (Quiet Time Period) |
| 2 | OPS |
| 3 | PDP |
| 4-255 | Reserved (Reserved) |

As described in Table 6, if the value of the HE Action field is 3, it indicates that the frame is an HE PDP frame. Table 7 describes an example value of the HE PDP frame action field. As described in Table 7, when the value of the PDP frame action field is 3, it indicates that the frame carries HE MIMO control information. When the value of the PDP frame action field is 4, it indicates that the frame carries HE PDP report information, so that the sensing response device 220 or 230 feeds back PDP data to the sensing initiation device 210. Details are described in the following.

**Table 7**

| Value | Description |
|---|---|
| 1 | Category (Category) |
| 2 | HE action (HE Action) |
| 3 | HE MIMO control (HE MIMO Control) |
| 4 | HE PDP report (HE PDP report) |

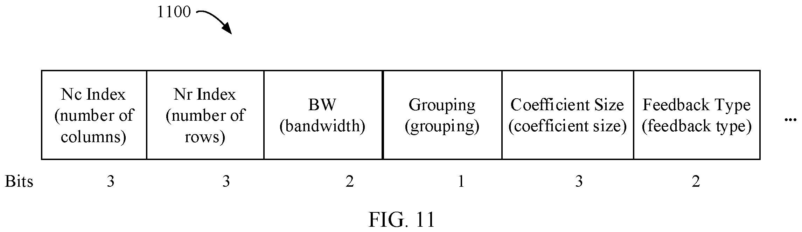

The HE MIMO Control field may be designed based on an existing HE frame structure. In the HE PDP frame, some fields in the HE MIMO Control field are reserved (Reserved). FIG. 11 illustrates an example frame structure 1100 of an HE MIMO Control field according to some embodiments of this disclosure. Meanings of fields are described in Table 8 below.

**Table 8**

| Field | Description |
|---|---|
| Nc index (Nc index) (3 bits) | Indicating a number of columns in a PDP matrix minus 1. In the PDP matrix, Nc corresponds to a feedback length on a single antenna, for example, corresponds to L in Table 3. |
| Nr index (Nr index) (3 bits) | Indicating a number of rows in a PDP matrix minus 1. In the PDP matrix, Nr corresponds a number of receive channels on a receive side. |
| Bandwidth (BW) (2 bits) | Having same meanings as a corresponding legacy HE MIMO control field. |
| Grouping (Grouping) (1 bit) | Reserved (Reserved) |
| Codebook information/ Coefficient size (Codebook information/ Coefficient Size) (3 bits) | 0, quantization bit Nb = 4<br><br>1, quantization bit Nb = 5<br><br>2, quantization bit Nb = 6<br>3, quantization bit Nb = 8<br>4-7, reserved (Reserved)<br>As a measurement bandwidth increases, quantization bits may accordingly continue to increase. |
| Feedback type (Feedback type) (2 bits) | Reserved (Reserved) |
| ... | Having same meanings as a corresponding legacy HE MIMO control field. |

It may be learned that by using the HE MIMO Control field, the sensing initiation device 210 may indicate to the sensing response device 220 or 230 which part of PDP data is fed back.

An example EHT PDP frame is described below. A new type may be added to the EHT Action (EHT Action) field, as described in Table 9.

**Table 9**

| Value | Description |
|---|---|
| 0 | EHT compressed beamforming/CQI (EHT compressed beamforming/CQI) |
| 1 | PDP |
| 2-255 | Reserved (Reserved) |

As described in Table 10, if the value of the EHT Action field is 1, it indicates that the frame is an EHT PDP frame. Table 10 describes an example value of the EHT PDP frame action field. As described in Table 11, when the value of the PDP frame action field is 3, it indicates that the frame carries the EHT MIMO control information. When the value of the PDP frame action field is 4, it indicates that the frame carries the EHT PDP report information. Details are described in the following.

**Table 10**

| Value | Description |
|---|---|
| 1 | Category (Category) |
| 2 | EHT action (EHT Action) |

(continued)

| Value | Description |
|---|---|
| 3 | EHT MIMO control (EHT MIMO Control) |
| 4 | EHT PDP report (EHT PDP report) |

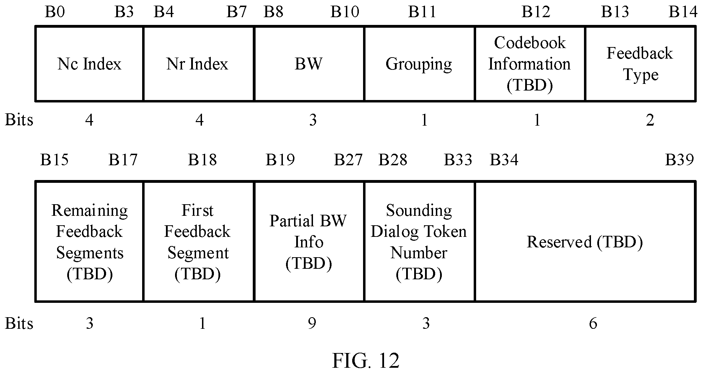

The EHT MIMO Control field may be designed based on an existing EHT frame structure, as described in FIG. 12. In the EHT PDP frame, some fields in the EHT MIMO Control field are reserved (Reserved).

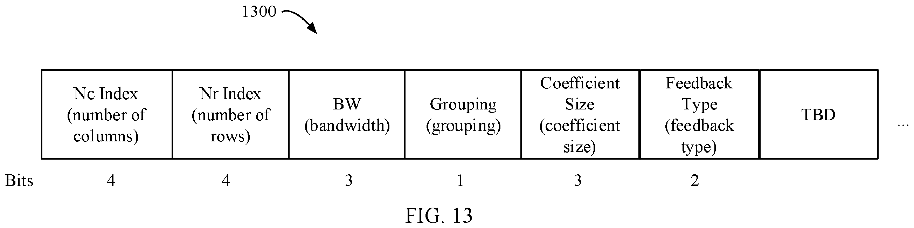

FIG. 13 illustrates an example frame structure 1300 of an EHT MIMO Control field according to some embodiments of this disclosure. Meanings of fields are described in Table 11 below.

**Table 11**

| Field | Description |
|---|---|
| Nc index (Nc index) (4 bits) | Indicating a number of columns in a PDP matrix minus 1. In the PDP matrix, Nc corresponds to a feedback length on a single antenna, and corresponds to L in Table 3. |
| Nr index (Nr index) (4 bits) | Indicating a number of rows in a PDP matrix minus 1. In the PDP matrix, Nr corresponds a number of receive channels on a receive side. |
| Bandwidth (BW) (3 bits) | Having same meanings as a corresponding legacy EHT MIMO control field. |
| Grouping (Grouping) | Reserved (Reserved) |
| Codebook information/ Coefficient size (Codebook information/ Coefficient Size) (3 bits) | 0, quantization bit Nb = 4<br><br>1, quantization bit Nb = 5<br><br>2, quantization bit Nb = 6<br>3, quantization bit Nb = 8<br>4-7, reserved (Reserved)<br>As a measurement bandwidth increases, quantization bits may accordingly continue to increase. |
| Feedback type (Feedback type) | Reserved (Reserved) |
| ... | To be designed (TBD) |

The PDP frame providing the indication associated with PDP data feedback may be sent by the sensing initiation device 210 to the sensing response devices 220 and 230 in the feedback stage 820, the measurement stage 815, and the setting stage 810, thereby providing greater flexibility.

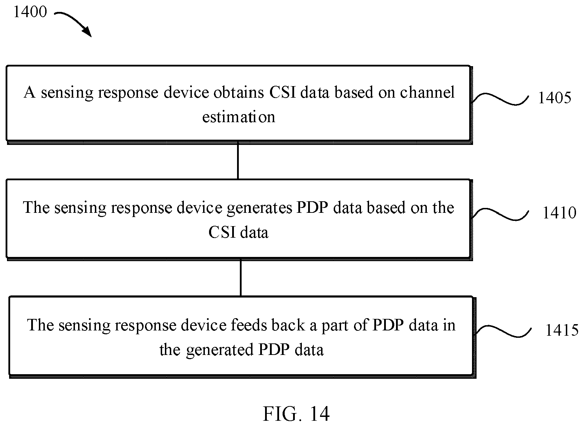

As shown in FIG. 7, in a block 710, the sensing response device 220 or 230 feeds back a part of PDP data in the generated PDP data. The following describes example processing of PDP data fed back by the sensing response device 220 or 230 with reference to FIG. 14.

FIG. 14 is a flowchart of a method 1400 for performing feedback based on CSI at a sensing response device 220 or 230 according to some embodiments of this disclosure.

As shown in FIG. 14, in a block 1405, the sensing response device 220 or 230 obtains CSI data based on channel estimation. Any appropriate channel estimation technique currently known and to be developed may be used herein, and the scope of this disclosure is not limited in this aspect. In a block 1410, the sensing response device 220 or 230 generates PDP data based on the CSI data. As an example, the PDP data may be generated through IFT or IFFT. Any other appropriate method of generating PDP data based on CSI data may alternatively be used.

In a block 1415, the sensing response device 220 or 230 feeds back the part of PDP data in the generated PDP data. In some embodiments, the part of PDP data may be fed back based on a propagation distance of a propagation path of a sensing signal. For example, the sensing response device 220 or 230 may select PDP data corresponding to a propagation path whose propagation distance is less than or equal to a predetermined threshold as PDP data to be fed back. The threshold may be predefined, or may be dynamically configured. For example, as described above, a sensing initiation device 210 may send an indication for a range of interested to the sensing response device 220 or 230, for example, by using a Trigger frame, an NDPA frame, or an Announcement frame. Correspondingly, the sensing response device 220 or 230 may use the range of interested as a threshold, and feed back PDP data corresponding to a propagation distance less than or equal to the range of interested.

In some embodiments, the sensing response device 220 or 230 may alternatively feed back PDP data based on an offset. For example, the sensing response device 220 or 230 may receive an indication for the offset from the sensing initiation device 210. Then, the sensing response device 220 or 230 may determine the PDP data to be fed back based on the range of interested and the offset.

For example, in a MIMO scenario, after the sensing response device 220 or 230 receives an indication for PDP feedback from the sensing initiation device 210, IFFT processing may be performed for channel estimation of each stream on each receive channel, and then the first several pieces of data whose length is L (as described in Table 3) are selected for feedback.

In some other embodiments, as described above, in the MIMO scenario, the sensing initiation device 210 may use a MIMO control field of a dedicated PDP frame to indicate to the sensing response device 220 or 230 which PDP data is fed back. In these embodiments, the sensing response device 220 or 230 may select the PDP data to be fed back according to an indication in the MIMO control field.

For example, as described in Table 8 and Table 11, a dimension of a PDP matrix to be fed back may be represented as $N_{STS} \times Nr \times L$ on the whole, where $N_{STS}$ represents a number of space-time streams, Nr represents a number of receive channels of a receiver, and L represents a length of data to be fed back after IFFT processing is performed on each stream on each receive chain. A format of the feedback data is encoded as follows:

```
each space-time stream (1, ..., and NSTS, NSTS in total) includes the following
information:
{the feedback matrix includes Nr (1, ..., and Nr, Nr in total) rows, and each row
includes the following information:
{including L (1, ..., and L, L in total) complex numbers, and for each complex
number, quantization transmission is performed
based on a real part (Nb bits) and an imaginary
part (Nb bits).
    }}
```

Nb may correspond to Codebook information/Coefficient Size (3 bits) in the MIMO control field in Table 8 and Table 11.

The sensing response device 220 or 230 may use PDP report information to feed back the PDP data. For example, for the HE PDP frame, as described in Table 7, the value of the PDP frame action field may be set to 4, to indicate that a current frame bears HE PDP report (HE PDP Report) information. For the EHT PDP frame, as described in Table 10, when the value of the PDP frame action field is 4, it indicates that the frame carries EHT PDP report information. Example information included in the PDP Report information is described in Table 12.

**Table 12**

| Field | Length (bit) | Description |
|---|---|---|
| SNR in a receive channel 1 | 8 | Signal-to-noise ratio in a first receive channel of the device that sends the report |
| ... | ... | ... |
| SNR in a receive channel Nr | 8 | Signal-to-noise ratio in an $Nr^{th}$ receive channel of the device that sends the report |
| PDP matrix for a space-time stream 1 | $2 \times Nb \times L \times Nr$ | PDP matrix |
| ... | ... | ... |
| PDP matrix for a space-time stream $N_{STS}$ | $2 \times Nb \times L \times Nr$ | PDP matrix |

Nb represents a quantization bit, L represents a length of a complex number fed back after IFFT processing (described in Table 3), Nr represents a number of receive channels of a matrix sensing receiver/a device for sending a report, and $N_{STS}$ represents a number of space-time streams.

It should be understood that, as described above with reference to FIG. 7 and FIG. 14, the sensing response device 220 or 230 performs channel estimation and generates CSI data after receiving an indication for PDP data feedback from the sensing initiation device 210. This is merely an example but not a limitation. In some embodiments, the sensing response device 220 or 230 may autonomously perform channel estimation and generate CSI data and accordingly generate PDP data. After the indication for PDP data feedback is received from the sensing initiation device 210, a part of PDP data is fed back to the sensing initiation device 210. In some other embodiments, the sensing response device 220 or 230 may alternatively periodically or spontaneously perform channel estimation, generate CSI data, and generate and feed back PDP data, without being triggered by an indication from the sensing initiation device 210.

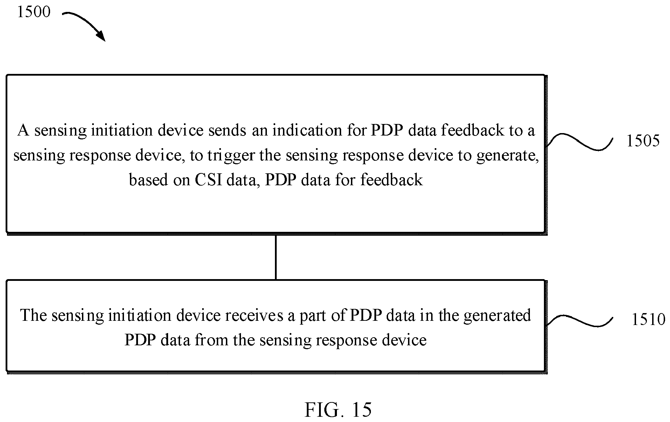

FIG. 15 is a flowchart of a method 1500 for performing feedback based on CSI at a sensing initiation device 210 according to some embodiments of this disclosure.

As shown in FIG. 15, in a block 1505, the sensing initiation device 210 sends an indication for PDP data feedback to a sensing response device 220 or 230, to trigger the sensing response device 220 or 230 to generate, based on CSI data, PDP data for feedback. In a block 1510, the sensing initiation device 210 receives a part of PDP data in the generated PDP data from the sensing response device 220 or 230.

In some embodiments, the sensing initiation device 210 sends the indication for PDP data feedback to the sensing response device 220 or 230 by using at least one of a Trigger frame, an NDPA frame, an Announcement frame, or a PDP frame. In some embodiments, a common information field or a dedicated information field in the Trigger frame indicates to perform PDP data feedback. In some embodiments, a trigger type field included in the common information field in the Trigger frame indicates to perform PDP data feedback. In some embodiments, a sounding dialog token field or a dedicated information field in the NDPA frame indicates to perform PDP data feedback. In some embodiments, an AID field included in the dedicated information field in the NDPA frame indicates to perform PDP data feedback.

In some embodiments, the PDP frame includes a MIMO control field. The MIMO control field includes an indication for at least one of a number of columns, a number of rows, or a number of quantized bits of a matrix element of a PDP matrix for feedback. In some embodiments, the sensing initiation device 210 receives the part of PDP data from the sensing response device 220 or 230 by using a PDP report frame.

In some embodiments, the sensing initiation device 210 sends at least one of an indication for a range of interested or an indication for an offset to the sensing response device 220 or 230. For example, the sensing initiation device 210 may send the at least one of the indication for the range of interested or the indication for the offset to the sensing response device 220 or 230 by using at least one of a Trigger frame, an NDPA frame, an Announcement frame, or a PDP frame. In some embodiments, a trigger dependent information field included in a common information field in the trigger frame indicates at least one of the range of interested or the offset.

It should be understood that the operations and features described above with reference to FIG. 2 to FIG. 14 are also applicable to the method 1500, and have same effect. Details are not described again.

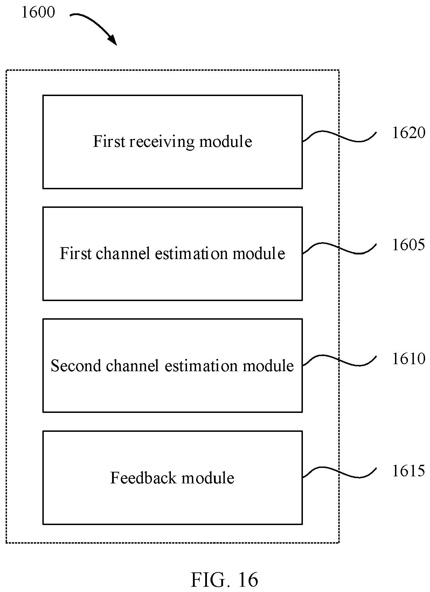

An embodiment of this disclosure further provides a corresponding apparatus for implementing the foregoing method or process. FIG. 16 is a schematic block diagram of a structure of an apparatus 1600 for performing feedback based on CSI at a sensing response device 220 or 230 according to some embodiments of this disclosure.

As shown in FIG. 16, the apparatus 1600 includes a first channel estimation module 1605, configured to obtain CSI data based on channel estimation; a second channel estimation module 1610, configured to generate PDP data based on the CSI data; and a feedback module 1615, configured to feed back a part of PDP data in the generated PDP data.

In some embodiments, the apparatus 1600 further includes a first receiving module 1620, configured to receive an indication for PDP data feedback from a sensing initiation device by using the sensing response device before the CSI data is obtained based on channel estimation. In some embodiments, the second channel estimation module 1610 is configured to generate the PDP data based on the CSI data by using the sensing response device in response to the reception of the indication for PDP data feedback.

In some embodiments, the first receiving module 1620 is configured to receive the indication for PDP data feedback from the sensing initiation device by using the sensing response device by using at least one of a trigger frame, a null data packet announcement NDPA frame, an announcement frame, or a PDP frame for indicating PDP data feedback. In some embodiments, a common information field or a dedicated information field in the trigger frame indicates to perform PDP data feedback. In some embodiments, a trigger type field included in the common information field in the trigger frame indicates to perform PDP data feedback. In some embodiments, a sounding dialog token field or a dedicated information field in the NDPA frame indicates to perform PDP data feedback. In some embodiments, an AID field included in the dedicated information field in the NDPA frame indicates to perform PDP data feedback.

In some embodiments, the PDP frame includes a multi-input multi-output MIMO control field. The MIMO control field includes an indication for at least one of a number of columns, a number of rows, or a number of quantized bits of a matrix element of a PDP matrix for feedback. In some embodiments, the feedback module 1615 is configured to select the part of PDP data to be fed back from the generated PDP data by using the sensing response device based on the indication for the at least one of the number of columns, the number of rows, or the number of quantized bits of the matrix element of the PDP matrix for feedback.

In some embodiments, the feedback module 1615 is configured to feed back the part of PDP data in the generated PDP data to the sensing initiation device by using the sensing response device by using a PDP report frame.

In some embodiments, the feedback module 1615 is configured to feed back the part of PDP data by using the sensing response device based on a propagation distance of a sensing signal.

In some embodiments, the apparatus 1600 further includes a second receiving module, configured to receive an indication for a range of interested from the sensing initiation device by using the sensing response device. The feedback module 1615 is configured to feed back the part of PDP data based at least on the range of interested by using the sensing response device.

In some embodiments, the second receiving module is configured to receive an indication for an offset from the sensing initiation device by using the sensing response device. The feedback module 1615 is configured to feed back the part of PDP data based on the range of interested and the offset by using the sensing response device.

In some embodiments, the second receiving module is configured to receive at least one of the indication for the range of interested or the indication for the offset from the sensing initiation device by using the sensing response device by using at least one of a trigger frame, a null data packet announcement NDPA frame, an announcement frame, or a PDP frame for indicating PDP data feedback. In some embodiments, a trigger dependent information field included in a common information field in the trigger frame indicates at least one of the range of interested or the offset.

It should be understood that the operations and features at the sensing response device 220 or 230 described above with reference to FIG. 2 to FIG. 14 are also applicable to the apparatus 1600, and have same effect. Details are not described again.

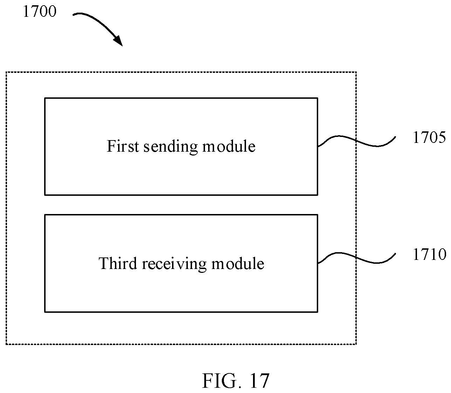

FIG. 17 is a schematic block diagram of a structure of an apparatus 1700 for performing feedback based on CSI at a sensing initiation device 210 according to some embodiments of this disclosure.

As shown in FIG. 17, the apparatus 1700 includes a first sending module 1705, configured to send an indication for power delay profile PDP data feedback to a sensing response device by using the sensing initiation device, to trigger the sensing response device to generate, based on channel state information CSI data, PDP data for feedback to the sensing initiation device; and a third receiving module 1710, configured to receive a part of PDP data in the generated PDP data from the sensing response device by using the sensing initiation device.

In some embodiments, the first sending module is configured to send the indication for PDP data feedback to the sensing response device by using the sensing initiation device by using at least one of a trigger frame, a null data packet announcement NDPA frame, an announcement frame, or a PDP frame for indicating PDP data feedback. In some embodiments, a common information field or a dedicated information field in the trigger frame indicates to perform PDP data feedback. In some embodiments, a trigger type field included in the common information field in the trigger frame indicates to perform PDP data feedback. In some embodiments, a sounding dialog token field or a dedicated information field in the NDPA frame indicates to perform PDP data feedback. In some embodiments, an AID field included in the dedicated information field in the NDPA frame indicates to perform PDP data feedback.

In some embodiments, the PDP frame includes a multi-input multi-output MIMO control field. The MIMO control field includes an indication for at least one of a number of columns, a number of rows, or a number of quantized bits of a matrix element of a PDP matrix for feedback.

In some embodiments, the third receiving module is configured to receive the part of PDP data from the sensing response device by using the sensing initiation device by using a PDP report frame.

In some embodiments, the apparatus 1700 further includes a second sending module, configured to send at least one of an indication for a range of interested or an indication for an offset to the sensing response device by using the sensing initiation device. In some embodiments, the second sending module is configured to send the at least one of the indication for the range of interested or the indication for the offset to the sensing response device by using the sensing initiation device by using at least one of a trigger frame, a null data packet announcement NDPA frame, an announcement frame, or a PDP frame for PDP data feedback. In some embodiments, a trigger dependent information field included in a common information field in the trigger frame indicates at least one of the range of interested or the offset.

It should be understood that the operations and features at the sensing initiation device 210 described above with reference to FIG. 2 to FIG. 14 are also applicable to the apparatus 1700, and have same effect. Details are not described again.

Modules included in the apparatuses 1600 and 1700 may be implemented by using software, hardware, firmware, or any combination thereof. In some embodiments, one or more modules may be implemented by using software and/or firmware, for example, machine-executable instructions stored in a storage medium. In addition to or as an alternative to the machine-executable instructions, some or all of the modules in the apparatuses 1600 and 1700 may be implemented at least partially by using one or more hardware logical components. By way of example and not limitation, the available example hardware logic components include a field programmable gate array (FPGA), an application-specific integrated circuit (ASIC), an application-specific standard product (ASSP), a system on chip (SOC), a complex programmable logic device (CPLD), and the like.

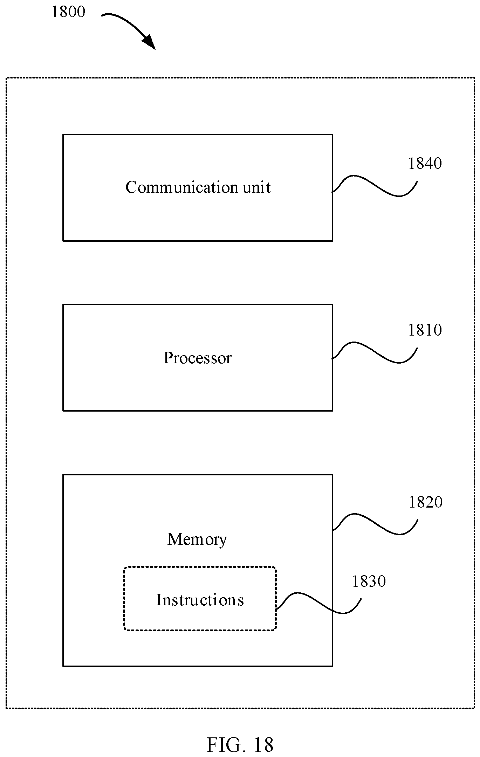

FIG. 18 is a block diagram of a device 1800 in which some embodiments of this disclosure may be implemented. The device 1800 can be configured to implement the sensing initiation device 210 or the sensing response device 220 or 230 shown in FIG. 2.

As shown in FIG. 18, the device 1800 includes a processor 1810, and the processor 1810 controls operations and functions of the device 1800. For example, in some example embodiments, the processor 1810 may perform various operations by using instructions 1830 stored in a memory 1820 coupled to the processor 1810. The memory 1820 may be of any appropriate type applicable to a local technical environment, and may be implemented by using any appropriate data storage technology, including but not limited to a semiconductor-based storage device, a magnetic storage device and system, and an optical storage device and system. Although only one memory unit is shown in FIG. 18, there may be a plurality of physically different memory units in the device 1800.

The processor 1810 may be of any appropriate type applicable to a local technical environment, and may include but not be limited to one or more of a general-purpose computer, a dedicated computer, a microcontroller, a digital signal processor (DSP), and a controller-based multi-core controller architecture. The device 1800 may further include a plurality of processors 1810. The processor 1810 is coupled to a communication unit 1840. The communication unit 1840 may receive and send information by using a radio signal or through an optical fiber, a cable, and/or another component.

When the device 1800 acts as the sensing response device 220 or 230, the processor 1810 may implement the operations and actions at the sensing response device 220 or 230 described above with reference to FIG. 2 to FIG. 17 by executing instructions. When the device 1800 acts as the sensing initiation device 210, the processor 1810 may implement the operations and actions at the sensing initiation device 210 described above with reference to FIG. 2 to FIG. 17 by executing instructions. All the features described above with reference to FIG. 2 to FIG. 17 are applicable to the device 1800, and details are not described herein again.

In general, the various example embodiments of this disclosure may be implemented in hardware or dedicated circuitry, software, logic, or any combination thereof. Some aspects may be implemented in hardware, while other aspects may be implemented in firmware or software that may be executed by a controller, a microprocessor, or another computing device. When aspects of the example embodiments of this disclosure are illustrated or described as block diagrams, flowcharts, or represented using some other figures, it will be understood that the blocks, apparatuses, systems, techniques, or methods described herein may be implemented as non-limiting examples in hardware, software, firmware, dedicated circuitry or logic, general-purpose hardware or controllers, or other computing devices, or some combinations thereof.

For example, the example embodiments of this disclosure may be described in a context of machine-executable or computer-executable instructions. The machine-executable instructions are, for example, a program module executed in a device included in a real or virtual processor of a target. Usually, the program module includes a routine, a program, a library, an object, a class, a component, a data structure, and the like, and executes a specific task or implements a specific abstract data structure. In various example embodiments, functions of program modules may be combined or split between the described program modules. The machine-executable instructions for the program module may be executed locally or within a distributed device. In the distributed device, the program module may be located in both a local storage medium and a remote storage medium.

Computer program code used to implement the methods disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In the context of this disclosure, a machine-readable medium or a computer-readable medium may be any tangible medium that includes or stores a program for or has a program related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, while operations are described in a particular order, this should not be understood as requiring such operations to be completed in the particular order shown or in a successive order, or performing all the illustrated operations to obtain the desired results. In some cases, multitasking or parallel processing is advantageous. Similarly, while the foregoing descriptions include some specific implementation details, this should not be construed as limiting the scope of any invention or claims, but rather as a description of specific example embodiments that may be specific to a particular invention. Some features described in this specification in the context of separate example embodiments

EP 4 293 930 A1

may alternatively be integrated into a single example embodiment. Conversely, various features that are described in the context of a single example embodiment may alternatively be implemented separately in multiple example embodiments or in any appropriate sub-combination.

Although the subject matter has been described in language specific to structural features and/or methodological actions, it should be understood that the subject matter defined in the appended claims is not limited to the specific features or actions described above. Rather, the specific features and actions described above are disclosed as example forms of implementing the claims.

## Claims

1. A communication method, comprising:

   sending, by a sensing initiation device, an indication for power delay profile PDP data feedback to a sensing response device, to trigger the sensing response device to generate, based on CSI data, PDP data for feedback; and
   receiving, by the sensing initiation device, a part of PDP data in the generated PDP data from the sensing response device.

2. The method according to claim 1, wherein the sending an indication for PDP data feedback comprises:
   sending, by the sensing initiation device, the indication for PDP data feedback to the sensing response device by using at least one of a trigger frame, a null data packet announcement NDPA frame, an announcement frame, or a PDP frame for indicating PDP data feedback.

3. The method according to claim 2, wherein a common information field or a dedicated information field in the trigger frame indicates to perform PDP data feedback.

4. The method according to claim 3, wherein a trigger type field comprised in the common information field in the trigger frame indicates to perform PDP data feedback.

5. The method according to claim 2, wherein a sounding dialog token field or a dedicated information field in the NDPA frame indicates to perform PDP data feedback.

6. The method according to claim 5, wherein an association identifier AID field comprised in the dedicated information field in the NDPA frame indicates to perform PDP data feedback.

7. The method according to claim 2, wherein the PDP frame comprises a multi-input multi-output MIMO control field, and the MIMO control field comprises an indication for at least one of a number of columns, a number of rows, or a number of quantized bits of a matrix element of a PDP matrix for feedback.

8. The method according to claim 1, wherein the receiving a part of PDP data comprises:
   receiving, by the sensing initiation device, the part of PDP data from the sensing response device by using a PDP report frame.

9. The method according to claim 1, further comprising:
   sending, by the sensing initiation device, at least one of an indication for a range of interested or an indication for an offset to the sensing response device.

10. The method according to claim 9, wherein
    the sensing initiation device sends the at least one of the indication for the range of interested or the indication for the offset to the sensing response device by using at least one of a trigger frame, a null data packet announcement NDPA frame, an announcement frame, or a PDP frame for indicating PDP data feedback.

11. The method according to claim 10, wherein a trigger dependent information field comprised in a common information field in the trigger frame indicates at least one of the range of interested or the offset.

12. A communication method, comprising:

obtaining, by a sensing response device, CSI data based on channel estimation;
generating, by the sensing response device, power delay profile PDP data based on the CSI data; and
feeding back, by the sensing response device, a part of PDP data in the generated PDP data.

13. The method according to claim 12, further comprising:
receiving, by the sensing response device, an indication for PDP data feedback from the sensing initiation device before the CSI data is obtained based on channel estimation.

14. The method according to claim 13, wherein the generating PDP data comprises:
generating, by the sensing response device, the PDP data based on the CSI data in response to the reception of the indication for PDP data feedback.

15. The method according to claim 13, wherein the receiving an indication for PDP data feedback comprises:
receiving, by the sensing response device, the indication for PDP data feedback from the sensing initiation device by using at least one of a trigger frame, a null data packet announcement NDPA frame, an announcement frame, or a PDP frame for indicating PDP data feedback.

16. The method according to claim 15, wherein a common information field or a dedicated information field in the trigger frame indicates to perform PDP data feedback.

17. The method according to claim 16, wherein a trigger type field comprised in the common information field in the trigger frame indicates to perform PDP data feedback.

18. The method according to claim 15, wherein a sounding dialog token field or a dedicated information field in the NDPA frame indicates to perform PDP data feedback.

19. The method according to claim 18, wherein an association identifier AID field comprised in the dedicated information field in the NDPA frame indicates to perform PDP data feedback.

20. The method according to claim 15, wherein the PDP frame comprises a multi-input multi-output MIMO control field, and the MIMO control field comprises an indication for at least one of a number of columns, a number of rows, or a number of quantized bits of a matrix element of a PDP matrix for feedback.

21. The method according to claim 20, wherein the feeding back a part of PDP data comprises:
selecting, by the sensing response device, the part of PDP data to be fed back from the generated PDP data based on the indication for the at least one of the number of columns, the number of rows, or the number of quantized bits of the matrix element of the PDP matrix for feedback.

22. The method according to claim 12, wherein the feeding back a part of PDP data comprises:
feeding back, by the sensing response device, the part of PDP data in the generated PDP data by using a PDP report frame.

23. The method according to claim 12, wherein the feeding back a part of PDP data comprises:
feeding back, by the sensing response device, the part of PDP data based on a propagation distance of a sensing signal.

24. The method according to claim 23, wherein the feeding back a part of PDP data comprises:

receiving, by the sensing response device, an indication for a range of interested of the sensing signal from the sensing initiation device; and
feeding back, by the sensing response device, the part of PDP data based at least on the range of interested.

25. The method according to claim 24, wherein the feeding back the part of PDP data based at least on the range of interested comprises:

receiving, by the sensing response device, an indication for an offset from the sensing initiation device; and
feeding back, by the sensing response device, the part of PDP data based on the range of interested and the offset.

**26.** The method according to claim 25, wherein
the sensing response device receives at least one of the indication for the range of interested or the indication for the offset from the sensing initiation device by using at least one of a trigger frame, a null data packet announcement NDPA frame, an announcement frame, or a PDP frame for indicating PDP data feedback.

**27.** The method according to claim 26, wherein a trigger dependent information field comprised in a common information field in the trigger frame indicates at least one of the range of interested or the offset.

**28.** The method according to claim 12, wherein the feeding back a part of PDP data comprises:
feeding back, by the sensing response device, the part of PDP data in the generated PDP data to the sensing initiation device.

**29.** A communication device, comprising:

a processor, wherein the processor is coupled to a memory, and the memory stores instructions; and
when the instructions are executed by the processor, the method according to any one of claims 1 to 11 or claims 12 to 28 is performed.

**30.** A computer-readable storage medium storing a program, wherein when at least a part of the program is executed by a processor in a device, the device is enabled to perform the method according to any one of claims 1 to 11 or claims 12 to 28.

**31.** A computer program product, wherein the computer program product comprises computer-executable instructions, and when the computer-executable instructions are executed, the method according to any one of claims 1 to 11 or claims 12 to 28 is implemented.

**32.** A chip, comprising a processing circuit, configured to perform the method according to any one of claims 1 to 11 or claims 12 to 28.

100

STA — 110

125 — 130

135

140

115 — STA    STA — 120

FIG. 1a

105

STA — 110

155 — 160

145

150

115 — STA    STA — 120

FIG. 1b

200

Sensing initiation device — 210

Sensing response device — 220

Sensing response device — 230

FIG. 2

300

| Sensing initiation device | | Sensing response device |

210

220

305

310

FIG. 3

400

Target

405

435

425

430

410

Sensing transmitter

420

Sensing receiver

415

FIG. 4

FIG. 5

FIG. 6

700

A sensing response device receives an indication for PDP data feedback from a sensing initiation device — 705

The sensing response device feeds back a part of PDP data in the generated PDP data to the sensing initiation device — 710

FIG. 7

800

805    810    815    820

825
| SENS. request |    840
| Announcement |    855    865
| NDPA | NDP |    | Trigger |

210

830 — | SENS. response |    845 — | Confirm |    860    870 — | PDP |

220

835 — | SENS. response |    850 — | Confirm |    875 — | PDP |

230

FIG. 8

900

905 → Common Info (common information)

910 → STA Info 1 (station information 1)

| Frame control (frame control) | Duration (duration) | RA (receiver address) | TA (transmitter address) | Common Info (common information) | STA Info 1 (station information 1) | ... | STA Info n (station information n) | Padding (padding) | FCS (frame check sequence) |
|---|---|---|---|---|---|---|---|---|---|

MAC header

FIG. 9a

34

EP 4 293 930 A1

915                    905                                                                                    920

| Trigger Type (frame control) | UL Length (uplink length) | ... | ... | Doppler (Doppler) | UL HE-SIG-A2 Reserved (UL HE-SIG-A2 reserved) | Reserved (reserved) | Trigger Dependent Common Info (trigger dependent common information) |
|---|---|---|---|---|---|---|---|

FIG. 9b

920

925
...

| Range of interested (range of interested) | Offset (offset) |
|---|---|

930
...

FIG. 9c

1000

1005   1010

| Frame control (frame control) | Duration (duration) | RA (receiver address) | TA (transmitter address) | Sounding Dialog Token (sounding dialog token) | STA Info 1 (station information 1) | ... | STA Info n (station information n) | FCS (frame check sequence) |
|---|---|---|---|---|---|---|---|---|

←——— MAC header ———→

FIG. 10a

STA Info 1
(station
information 1) — 1010

32 bits

| 1015 — AID11 (11-bit ID) | Range of interested (range of interested) | Offset (offset) | Reserved (reserved) | Disambiguity (disambiguity) | Reserved (reserved) |
|---|---|---|---|---|---|

Bits    11      1020      1025           1      4

FIG. 10b

1100

| Nc Index (number of columns) | Nr Index (number of rows) | BW (bandwidth) | Grouping (grouping) | Coefficient Size (coefficient size) | Feedback Type (feedback type) | ... |
|---|---|---|---|---|---|---|
| 3 | 3 | 2 | 1 | 3 | 2 | |

Bits

FIG. 11

| B0 | B3 | B4 | B7 | B8 | B10 | B11 | B12 | B13 | B14 |
|---|---|---|---|---|---|---|---|---|---|
| Nc Index | | Nr Index | | BW | | Grouping | Codebook Information (TBD) | Feedback Type | |

| Bits | 4 | 4 | 3 | 1 | 1 | 2 |

| B15 | B17 | B18 | B19 | B27 | B28 | B33 | B34 | B39 |
|---|---|---|---|---|---|---|---|---|
| Remaining Feedback Segments (TBD) | | First Feedback Segment (TBD) | Partial BW Info (TBD) | | Sounding Dialog Token Number (TBD) | | Reserved (TBD) | |

| Bits | 3 | 1 | 9 | 3 | 6 |

FIG. 12

| Nc Index (number of columns) | Nr Index (number of rows) | BW (bandwidth) | Grouping (grouping) | Coefficient Size (coefficient size) | Feedback Type (feedback type) | TBD |
|---|---|---|---|---|---|---|
| 4 | 4 | 3 | 1 | 3 | 2 | |

Bits

1300

FIG. 13

1400

A sensing response device obtains CSI data based on channel estimation — 1405

The sensing response device generates PDP data based on the CSI data — 1410

The sensing response device feeds back a part of PDP data in the generated PDP data — 1415

FIG. 14

1500

A sensing initiation device sends an indication for PDP data feedback to a sensing response device, to trigger the sensing response device to generate, based on CSI data, PDP data for feedback — 1505

The sensing initiation device receives a part of PDP data in the generated PDP data from the sensing response device — 1510

FIG. 15

1600

First receiving module — 1620

First channel estimation module — 1605

Second channel estimation module — 1610

Feedback module — 1615

FIG. 16

1700

First sending module

1705

Third receiving module

1710

FIG. 17

1800

Communication unit — 1840

Processor — 1810

Memory — 1820

Instructions — 1830

FIG. 18

## INTERNATIONAL SEARCH REPORT

| International application No. |
|---|
| **PCT/CN2022/082034** |

**A. CLASSIFICATION OF SUBJECT MATTER**

H04B 7/06(2006.01)i

According to International Patent Classification (IPC) or to both national classification and IPC

**B. FIELDS SEARCHED**

Minimum documentation searched (classification system followed by classification symbols)

H04B; H04W

Documentation searched other than minimum documentation to the extent that such documents are included in the fields searched

Electronic data base consulted during the international search (name of data base and, where practicable, search terms used)

CNPAT, CNKI, WPI, EPODOC, IEEE, 3GPP: 感知, 无线局域网, WLAN, WIFI, 功率时延谱, PDP, 信道冲激响应, CIR, 信道状态信息, CSI, 反馈, 响应, NDPA, 触发帧, 声明帧, sensing, Power Delay Profile, Channel Impulse Response, Channel State Information, feedback, trigger, announce, frame

**C. DOCUMENTS CONSIDERED TO BE RELEVANT**

| Category* | Citation of document, with indication, where appropriate, of the relevant passages | Relevant to claim No. |
|---|---|---|
| PX | HUAWEI TECHNOLOGIES CO., LTD. "IEEE 802.11-21/0660r0"Truncated Power Delay Profile(TPDP)"" *IEEE SUBMISSION*, 11 May 2021 (2021-05-11), section 3 | 1-32 |
| E | CN 114257347 A (XIDIAN UNIVERSITY) 29 March 2022 (2022-03-29) description, paragraph [0005] | 1, 12 |
| Y | US 2020136700 A1 (HUAWEI TECHNOLOGIES CO., LTD.) 30 April 2020 (2020-04-30) description, paragraphs [0025]-[0077] | 1-32 |
| Y | 朱海等 (ZHU, Hai et al.). "基于信道状态信息的WiFi环境感知技术 (CSI-based WiFi Environment Sensing)" 南京邮电大学学报(自然科学版) (Journal of Nanjing University of Posts and Telecommunications(Natural Science Edition)), Vol. 36, No. 01, 29 February 2016 (2016-02-29), section 2 | 1-32 |
| Y | MEDIATEK INC. "R1-1707856 "Overhead reduction on CSI feedback Type II"" *3GPP TSG RAN WG1 Meeting #89*, 19 May 2017 (2017-05-19), section 2 | 1-32 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2022** | **20 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/082034**

### C. DOCUMENTS CONSIDERED TO BE RELEVANT

| Category* | Citation of document, with indication, where appropriate, of the relevant passages | Relevant to claim No. |
|---|---|---|
| A | CN 112491750 A (HUAWEI TECHNOLOGIES CO., LTD.) 12 March 2021 (2021-03-12) entire document | 1-32 |
| A | CN 112218328 A (HUAWEI TECHNOLOGIES CO., LTD.) 12 January 2021 (2021-01-12) entire document | 1-32 |

Form PCT/ISA/210 (second sheet) (January 2015)

## INTERNATIONAL SEARCH REPORT
### Information on patent family members

| International application No. |
| --- |
| **PCT/CN2022/082034** |

| Patent document cited in search report | | | Publication date (day/month/year) | Patent family member(s) | | | Publication date (day/month/year) |
| --- | --- | --- | --- | --- | --- | --- | --- |
| CN | 114257347 | A | 29 March 2022 | None | | | |
| US | 2020136700 | A1 | 30 April 2020 | WO | 2020088489 | A1 | 07 May 2020 |
| CN | 112491750 | A | 12 March 2021 | WO | 2021047640 | A1 | 18 March 2021 |
| CN | 112218328 | A | 12 January 2021 | WO | 2021004378 | A1 | 14 January 2021 |

Form PCT/ISA/210 (patent family annex) (January 2015)